# FASCICULE DE BREVET EUROPEEN

(11) **EP 2 266 408 B1**
(45) Date de publication et mention de la délivrance du brevet: **25.09.2013**
(21) Numéro de dépôt: 10163218.0
(22) Date de dépôt: 19.05.2010
(51) Int. Cl.: A22C 11/00

(54) **Procédé et appareil de retrait de la peau d'un produit alimentaire**
Verfahren und Gerät zum Abziehen der Haut von einem Lebensmittelprodukt
Method and appliance for removing the skin from a food product

(30) Priorité: 25.06.2009 FR 0954336
(43) Date de publication de la demande: 29.12.2010
(73) Titulaire: Etablissements Collard Pelisson, 01430 Vieu d'Izenave (FR)
(72) Inventeur: Pelisson, Alain, 01430, VIEU D'IZENAVE (FR)
(74) Mandataire: Chevalier, Renaud Philippe

(56) Documents cités:
- EP-A1- 1 139 768
- DE-U1- 9 317 428
- US-A- 2 702 403
- US-A- 4 637 095
- US-B1- 6 354 931

## Description

La présente invention se rapporte à un procédé et à un appareil de retrait de la peau d'un produit alimentaire allongé, tel qu'un saucisson ou une saucisse.

Elle se rapporte plus particulièrement à un procédé et à un appareil pour retirer la peau d'un produit alimentaire du type saucisse ou saucisson, où la peau forme un boyau ou une enveloppe externe protectrice entourant une préparation alimentaire à base de viande et/ou de graisse animale.

Au sens de la présente demande, une saucisse ou un saucisson peuvent être constitués de :
- un produit de charcuterie à base d'une préparation de viande de porc, de boeuf ou de cheval et de gras hachés plus ou moins fin, assaisonnés et épicés, contenue dans un boyau fermé aux deux extrémités souvent ligaturées ou ficelées, éventuellement séché et à consommer cru ou cuit, pour former par exemple une rosette, un chorizo, un salami, une mortadelle ou autre saucisson équivalent ;
- un produit à base d'une préparation de tripes, de chair et de lard de porc, hachés et assaisonnés, contenue dans un boyau fermé aux deux extrémités, pour former par exemple une andouille ou andouillette ;
- un produit de charcuterie à base d'une préparation faite de chair hachée et épicée, cuite et contenue dans un boyau fermé aux deux extrémités, pour former par exemple un cervelas ; et
- un produit fait d'un boyau rempli de sang et de graisse de porc (ou d'autres animaux) et de divers aromates, pour former par exemple un boudin.

L'invention se rapporte également à un procédé et à un appareil pour retirer la peau d'un produit alimentaire du type fromage où la peau forme un boyau ou une enveloppe externe protectrice entourant une préparation alimentaire à base de lait comme par exemple du lait coagulé, caillé ou fermenté ou autres produits laitiers.

Dans l'industrie alimentaire, il est connu de retirer la peau des saucisses, saucissons ou fromages pour ensuite découper la préparation alimentaire en tranche et l'emballer tel quel ou l'intégrer dans des préparations culinaires.

Pour retirer la peau des saucisses ou saucissons, il est par exemple connu des documents EP 1 139 768 B1, EP 0 573 067 B1, EP 0 809 439 B1, US 6 354 931, US 4 637 095, US 6 725 631 et DE 93 17 428 d'employer des moyens de saisie de la peau par pincement combinés généralement à des moyens de découpe de la peau. Ces moyens de saisie sont réalisés sous la forme de pinces ou de rouleaux rotatifs qui coincent la peau entre eux.

Un inconvénient de ces moyens de saisie par pincement est qu'ils ont souvent tendance à déchirer les peaux, en particulier les peaux les plus fines telles que les peaux réalisées à partir d'un film collagène ou cellulosique.

Un autre inconvénient de ces moyens de saisie par pincement réside dans la difficulté à saisir la peau par pincement car il faut pour cela passer à la fois en-dessous de la peau (côté face interne) et au-dessus de la peau (côté face externe) afin d'exercer une pression de pincement ou de serrage de la peau entre les mors de la pince ou entre les rouleaux. Cette étape de saisie par pincement est donc très complexe à mettre en oeuvre et difficilement reproductible, en particulier avec des saucisses ou saucissons de faible diamètre tel que compris entre 3 et 8 cm, limitant ainsi son application à une échelle industrielle.

La présente invention a pour but de résoudre les inconvénients de l'art antérieur en proposant un procédé et un appareil de retrait de la peau d'un produit alimentaire permettant une saisie de la peau de la saucisse ou du saucisson qui soit aisée, non responsable de déchirement et reproductible.

A cet effet, elle propose un procédé de retrait de la peau d'un produit alimentaire, tel qu'un saucisson ou une saucisse, s'étendant selon une direction longitudinale, caractérisé en ce que ledit procédé comprend les étapes suivantes :
a) réalisation d'au moins une entaille dans la peau à une extrémité du produit pour obtenir une ouverture délimitée par au moins deux rabats ;
b) perçage de la peau de part et d'autre de ladite entaille au moyen de dispositifs de perçage ;
c) pivotement des dispositifs de perçage afin d'écarter les rabats délimitant ladite entaille pour élargir ladite ouverture ;
d) déplacement relatif du produit par rapport aux dispositifs de perçage dans la direction longitudinale du produit.

Ainsi, la saisie de la peau se fait lors des étapes b) et c) où la peau est percée et ensuite retournée et enroulée pour à la fois permettre le passage du produit lors du déplacement de l'étape b) et permettre de maintenir ladite peau pendant ce déplacement, facilitant ainsi le pelage du produit ou retrait de la peau. Les étapes a) à c) permettent d'initier le pelage du produit au niveau de l'une de ses extrémités en découvrant cette extrémité du produit par écartement de la peau au moyen des dispositifs de perçage, avant le pelage final qui s'effectue lors de l'étape d).

Le procédé conforme à l'invention ne nécessite pas de passer en dessous de la peau, autrement dit de se glisser entre la préparation alimentaire et la peau entourant ladite préparation alimentaire, pour assurer la saisie initiale de la peau, contrairement aux moyens de saisie par pincement de l'art antérieur. En effet, avec le procédé conforme à l'invention, il suffit simplement de percer la peau, autrement dit de passer à travers la peau au moyen de dispositifs de perçage adéquats.

De façon avantageuse, les dispositifs de perçage sont pourvus respectivement d'au moins une pointe et d'une embase supportant ladite pointe, et l'étape c) consiste au pivotement des dispositifs de perçage afin d'enrouler la peau autour de ces embases pour écarter les rabats délimitant ladite entaille. Il est bien entendu préférable que chaque dispositif de perçage comporte plusieurs pointes rassemblées sur une embase commune mobile en rotation.

Les pointes jouent le rôle de poinçons qui passent à travers la peau lors de l'étape b). Pour éviter de cisailler ou endommager la peau lors de l'étape c) de pivotement, les pointes présentent avantageusement une surface non tranchante, avantageusement une surface sans angle saillant telle qu'une surface courbée ou arrondie, dans le sens de l'enroulement de la peau.

L'étape b) de perçage s'effectue soit en pressant le produit alimentaire contre les pointes jusqu'à perçage de la peau, soit en pressant les pointes contre la peau du produit.

Bien entendu, le nombre, les dimensions et la forme des pointes peuvent être adaptés en fonction des caractéristiques des produits alimentaires à peler, telles que les dimensions, la composition de la préparation alimentaire, le matériau constitutif de la peau, etc. En effet, lors du pivotement des dispositifs de perçage, l'effort de pelage de la peau s'effectue sur la surface de contact que présentent la ou les pointes avec la peau dans le sens de l'enroulement de la peau.

De façon encore avantageuse, lors de l'étape b), la ou les pointes des dispositifs de perçage sont enfoncées dans le produit jusqu'à leurs embase respectives et, lors de l'étape c), les dispositifs de perçage pivotent autour de leurs embases respectives pour que la peau s'enroule directement autour de ces embases.

Le procédé peut également comprendre, après l'étape c) de pivotement des dispositifs de perçage, une étape c1) d'éloignement des dispositifs de perçage par rapport au produit pour laisser le passage au produit lors de l'étape d) de déplacement relatif.

De façon avantageuse, le procédé comprend, de façon concomitante à l'étape c1) mentionnée ci-dessus, une étape c10) de déplacement du produit vers l'avant dans la direction longitudinale du produit afin de contribuer à l'écartement des rabats de peau lors de l'étape c1) d'éloignement des dispositifs de perçage.

Selon une caractéristique, le procédé comprend, après l'étape c1) d'éloignement des dispositifs de perçage, une étape c2) de serrage des rabats de peau par des moyens de serrage disposés respectivement entre le produit et les dispositifs de perçage éloignés lors de l'étape c1).

Ainsi, une fois que la peau a été saisie par les dispositifs de perçage et que le pelage a été initié, il peut être avantageux de compléter la saisie de la peau au moyen de ces moyens de serrage avant ou pendant le déplacement relatif de l'étape d). Le serrage des rabats est particulièrement aisé avec le procédé conforme à l'invention car ce serrage s'effectue une fois que les rabats de peau aient été écartés et donc éloignés de la préparation alimentaire.

Selon une autre caractéristique, le procédé comprend, après l'étape c2) de serrage, une étape c3) de tirage des rabats de peau par mise en rotation d'au moins un organe de serrage constitutif des moyens de serrage.

Ainsi, la rotation de l'un ou de chaque organe de serrage assure le tirage et donc le transport des bandes de peau prises entre les organes de serrage en question, facilitant ainsi le pelage du produit en complément de l'étape d) de déplacement relatif.

Entre les étapes c2) et c3), il est préférable de détacher la peau des dispositifs de serrage, par exemple en éloignant les dispositifs de perçage des moyens de serrage.

Dans un premier mode de réalisation, l'étape a) consiste à réaliser une entaille en forme de croix pour obtenir une ouverture délimitée par quatre rabats, et dans ce cas l'étape b) consiste à percer la peau dans les quatre rabats au moyen de quatre dispositifs de perçage.

Dans un second mode de réalisation, l'étape a) consiste à réaliser une entaille linéaire pour obtenir une ouverture délimitée par deux rabats, et dans ce cas l'étape b) consiste à percer la peau dans les deux rabats au moyen de deux dispositifs de perçage.

De façon avantageuse, le procédé comprend, après l'étape b) de perçage de la peau, une étape de pincement b1) de la peau directement sur les dispositifs de perçage pour serrer les rabats de peau directement sur lesdits dispositifs de perçage avant d'effectuer l'étape d) de déplacement.

De façon préférentielle, cette étape de pincement b1) de la peau directement sur les dispositifs de perçage est réalisé après l'étape c) de pivotement des dispositifs de perçage et avant l'étape d) de déplacement.

Ce pincement de la peau sur les dispositifs de perçage permet de diminuer l'effort de pelage exercé par les dispositifs de perçage lors du déplacement relatif du produit par rapport aux dispositifs de perçage ; ledit effort de pelage étant réparti sur les pointes et sur les moyens de pincement de la peau directement sur les dispositifs de perçage. Un tel pincement avant l'étape d) de déplacement, et éventuellement après l'étape c) de pivotement, limite ainsi les déchirements de peau en particulier pour les peaux délicates et les peaux en matière plastique.

Le procédé comprend de façon préférentielle, avant l'étape c) de pivotement des dispositifs de perçage, une étape d'incision de la peau dans la direction longitudinale du saucisson, de préférence dans le prolongement de l'entaille réalisée lors de l'étape a). Une telle incision, qui peut être effectuée de façon symétrique de part et d'autre de l'entaille, permet de détendre la peau au niveau de son extrémité et ainsi faciliter l'écartement des rabats de peau lors de l'étape c) de pivotement des dispositifs de perçage. L'incision peut être pratiquée sur tout ou partie de la longueur du produit alimentaire à peler.

L'invention concerne également un appareil de retrait de la peau d'un produit alimentaire allongé, tel qu'un saucisson ou une saucisse, caractérisé en ce qu'il comprend :
- des moyens de coupe conçus pour réaliser au moins une entaille dans la peau à une extrémité du produit pour obtenir une ouverture délimitée par au moins deux rabats ;
- des dispositifs de perçage conçus pour percer respectivement la peau de part et d'autre de ladite entaille ;
- des moyens de pivotement desdits dispositifs de perçage afin d'écarter les rabats délimitant ladite entaille pour élargir ladite ouverture ;
- des moyens de déplacement relatif du produit par rapport aux dispositifs de perçage dans la direction longitudinale du produit.

Cet appareil permet de mettre en oeuvre le procédé conforme à l'invention et présente ainsi les avantages décrits ci-dessus.

Selon une caractéristique, l'appareil comprend des moyens d'éloignement/rapprochement des dispositifs de perçage par rapport au produit, afin de pouvoir éloigner ou rapprocher les dispositifs relativement au saucisson.

L'appareil comprend avantageusement des moyens de serrage pourvus respectivement d'au moins deux organes de serrage dont l'un au moins est monté mobile entre :
- une position de repos dans laquelle les organes de serrage sont éloignés l'un de l'autre pour permettre le passage des dispositifs de perçage entre les organes de serrage correspondants ; et
- une position de serrage dans laquelle les organes de serrage serrent entre eux les rabats de peau du produit une fois les dispositifs de perçage éloignés du produit par les moyens d'éloignement/rapprochement.

De façon avantageuse, l'appareil comprend des moyens de mise en rotation de l'un au moins des organes de serrage afin de permettre le tirage des rabats de peau après serrage desdits rabats entre lesdits organes de serrage.

Dans un premier mode de réalisation, les moyens de coupe sont conçus pour réaliser une entaille en forme de croix pour obtenir une ouverture délimitée par quatre rabats, et les dispositifs de perçage sont au nombre de quatre et conçus pour percer la peau dans les quatre rabats respectifs.

Dans un second mode de réalisation, les moyens de coupe sont conçus pour réaliser une entaille linéaire pour obtenir une ouverture délimitée par deux rabats, et les dispositifs de perçage sont au nombre de deux et conçus pour percer la peau dans les deux rabats respectifs.

Selon une caractéristique, les dispositifs de perçage comprennent des moyens de pincement de la peau directement sur les dispositifs de perçage pour serrer les rabats de peau directement sur lesdits dispositifs de perçage.

Selon une autre caractéristique, l'appareil comprend des moyens d'incision de la peau dans la direction longitudinale du produit, de préférence dans le prolongement de l'entaille réalisée par les moyens de coupe.

D'autres caractéristiques et avantages de la présente invention apparaîtront à la lecture de la description détaillée ci-après, de plusieurs exemples de mise en oeuvre non limitatifs, faite en référence aux figures annexées dans lesquelles :
- la figure 1 est une vue en perspective d'un appareil de pelage selon un premier mode de réalisation de l'invention ;
- les figures 2 et 3 sont des vues schématiques d'un dispositif de perçage lors des étapes respectivement de perçage et de pivotement du procédé conforme à l'invention ;
- les figures 4a et 4b sont des vues schématiques partielles respectivement de face et de côté du poste de pelage de l'appareil de pelage illustré en figure 1 lors d'une première étape du procédé conforme à l'invention ;
- les figures 5a à 5c sont des vues schématiques partielles respectivement de face, de côté et en perspective du poste de pelage de l'appareil illustré en figure 1 lors d'une deuxième étape du procédé conforme à l'invention ;
- la figure 6a est une vue schématique partielle en perspective du poste de pelage de l'appareil illustré en figure 1 lors d'une troisième étape du procédé conforme à l'invention ;
- la figure 6b est une vue de face du saucisson 1 après la troisième étape du procédé illustrée en figure 6a ;
- la figure 6c est une vue détaillée de la figure 6a illustrant principalement les moyens d'incisions en position de repos, sans illustrer notamment les dispositifs de perçage ;
- les figures 7a et 7b sont des vues schématiques partielles en perspective avant et arrière du poste de pelage de l'appareil illustré en figure 1 lors d'une quatrième étape du procédé conforme à l'invention ;
- les figures 8a et 8b sont des vues schématiques partielles respectivement de face et de côté du poste de pelage de l'appareil de pelage illustré en figure 1 lors d'une cinquième étape du procédé conforme à l'invention ;
- les figures 9a et 9b sont des vues schématiques partielles respectivement de face et de côté du poste de pelage de l'appareil de pelage illustré en figure 1 lors d'une sixième étape du procédé conforme à l'invention ;
- les figures 10a à 10c sont des vues schématiques partielles respectivement de face et en perspective avant et arrière du poste de pelage de l'appareil de pelage illustré en figure 1 lors d'une septième étape du procédé conforme à l'invention ,
- la figure 11a est une vue schématique partielle en perspective du poste d'éjection des peaux après pelage de l'appareil de pelage illustré en figure 1 lors d'une huitième étape du procédé conforme à l'invention ,
- la figure 11b est une vue schématique partielle en perspective du poste d'éjection des peaux après pelage de l'appareil de pelage illustré en figure 1 lors d'une neuvième étape du procédé conforme à l'invention ,
- les figures 12a et 12b sont des vues respectivement en perspective et de face d'un dispositif de perçage conforme à une première réalisation ;
- les figures 13a et 13b sont des vues respectivement en perspective et de face d'un dispositif de perçage conforme à une seconde réalisation ;
- les figures 14a et 14b sont des vues schématiques partielles respectivement de face et en perspective avant d'une variante du poste de pelage de l'appareil de pelage illustré en figure 1 lors de la septième étape du procédé conforme à l'invention ;
- les figures 15a et 15b sont des vues schématiques en perspective de dispositifs de perçage équipés de moyens de pincement dans des positions respectivement ouverte et fermée ;
- la figure 16 est une vue schématique partielle de côté du poste d'entrée du produit et du poste de guidage du produit jusqu'au poste de pelage de l'appareil de pelage illustré en figure 1 ;
- la figure 17 est une vue en perspective d'un appareil de pelage selon un second mode de réalisation de l'invention ;
- les figures 18a et 18b sont des vues schématiques partielles en perspective du poste de pelage de l'appareil de pelage illustré en figure 17 lors d'une première étape du procédé conforme à l'invention ;
- la figure 19 est une vues schématique partielle en perspective du poste de pelage de l'appareil de pelage illustré en figure 17 lors d'une deuxième étape du procédé conforme à l'invention ;
- la figure 20 est une vues schématique partielle en perspective du poste de pelage de l'appareil de pelage illustré en figure 17 lors d'une troisième étape du procédé conforme à l'invention ;
- les figures 21a et 21b sont des vues schématiques partielles respectivement de dessus et en perspective du poste de pelage de l'appareil de pelage illustré en figure 17 lors d'une quatrième étape du procédé conforme à l'invention ;
- les figures 22a et 22b sont des vues schématiques partielles respectivement de dessus et en perspective du poste de pelage de l'appareil de pelage illustré en figure 17 lors d'une cinquième étape du procédé conforme à l'invention ;
- les figures 23a et 23b sont des vues schématiques partielles respectivement de dessus et en perspective du poste de pelage de l'appareil de pelage illustré en figure 17 lors d'une sixième étape du procédé conforme à l'invention ;
- les figures 24a et 24b sont des vues schématiques d'un produit alimentaire à peler du type saucisse ou saucisson présentant respectivement ses deux extrémités ligaturées et l'une de ses extrémités ouvertes par soufflage ; et
- les figures 25a à 25c sont des vues schématiques partielles de dessus du poste de soufflage de l'appareil de pelage illustré en figure 17 lors de trois étapes successives d'une opération de soufflage préalable destinée à ouvrir l'une des extrémités schématiques d'un produit alimentaire à peler du type saucisse ou saucisson.

La description qui suit porte sur un procédé et un appareil de retrait de la peau d'un saucisson ou une saucisse 1 allongé s'étendant selon une direction longitudinale et réalisé sous la forme d'une préparation alimentaire 10, notamment à base de viande et/ou de graisse animales, entouré d'une peau 11 fermé ou ligaturé aux deux extrémités par des liens respectifs, notamment du type clip ou ficelle. Pour la suite de la description, seul le terme « saucisson » sera employé pour décrire le produit alimentaire à peler.

Bien entendu, l'invention ne se limite pas à un appareil de retrait de la peau d'un saucisson ou d'une saucisse, mais peut également concerner un appareil de retrait de la peau d'un fromage.

De plus, le produit alimentaire illustré sur les figures se présente sous la forme d'un produit de section sensiblement cylindrique, mais d'autres formes de produit sont envisageables, comme par exemple un produit alimentaire allongé de section sensiblement carré ou rectangulaire donné à titre non limitatif.

La description qui suit porte sur un premier et un second mode de réalisation d'un appareil conforme à l'invention.

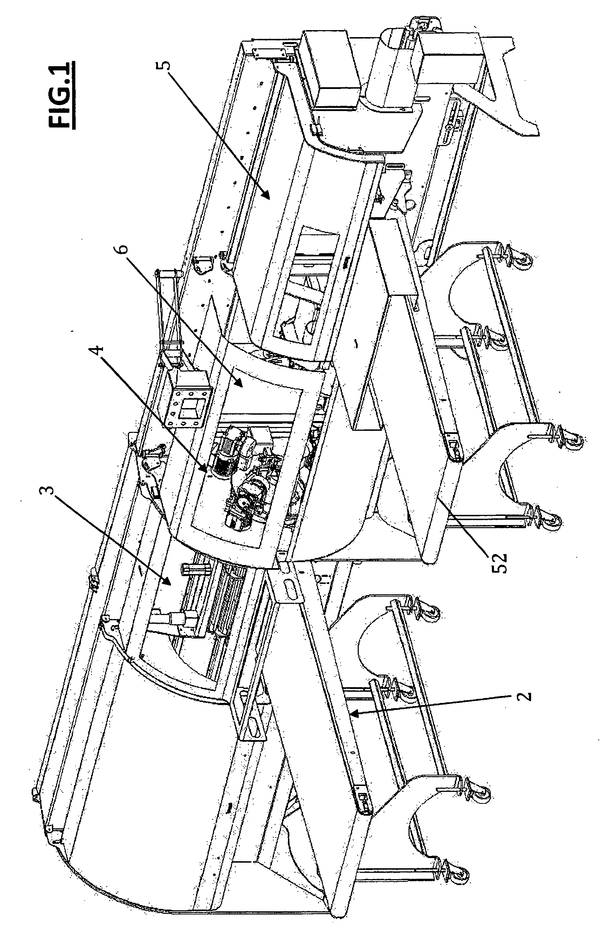

La première partie de la description porte sur le premier mode de réalisation d'un appareil conforme à l'invention et est faite en référence aux figures 1 à 16. Cet appareil est particulièrement adapté pour les saucissons de section circulaire présentant un diamètre de l'ordre de 6 à 25 cm ou des saucissons de section carrée présentant un côté de l'ordre de 6 à 25 cm, avec une longueur de l'ordre de 50 cm à 2 m voire plus.

Comme illustré en figure 1, cet appareil de retrait de la peau d'un saucisson comprend les postes successifs suivants :
- un poste d'entrée 2 de la saucisse avant pelage ;
- un poste de guidage 3 de la saucisse ;
- un poste de pelage 4 de la saucisse ;
- un poste de sortie 5 de la saucisse après pelage ;
- un poste d'évacuation 6 de la peau.

Le poste d'entrée 2 comprend un tapis roulant 20 sur lequel est déposé le saucisson avant d'atteindre le poste de guidage 3.

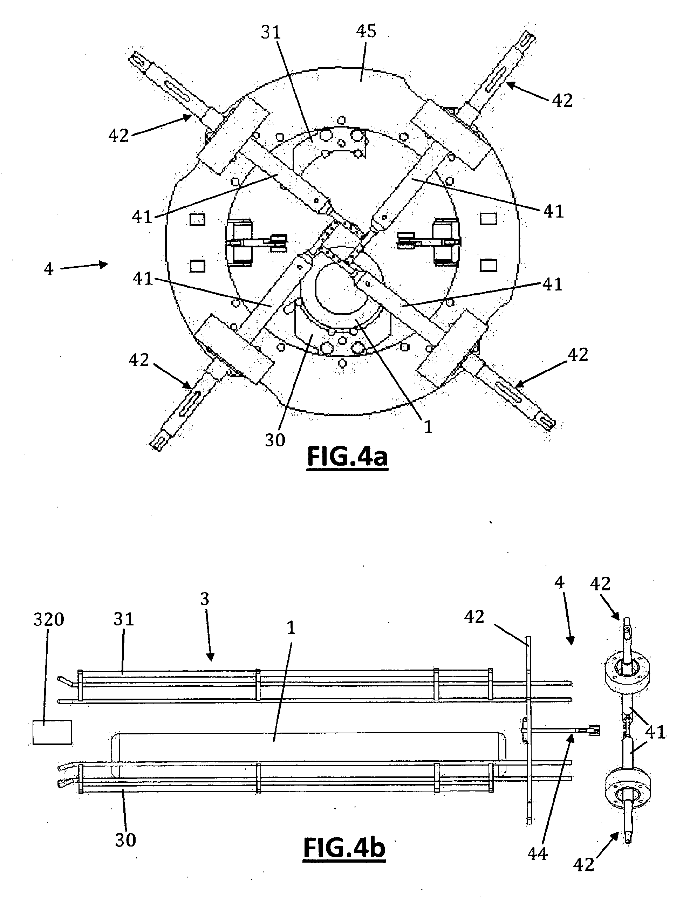

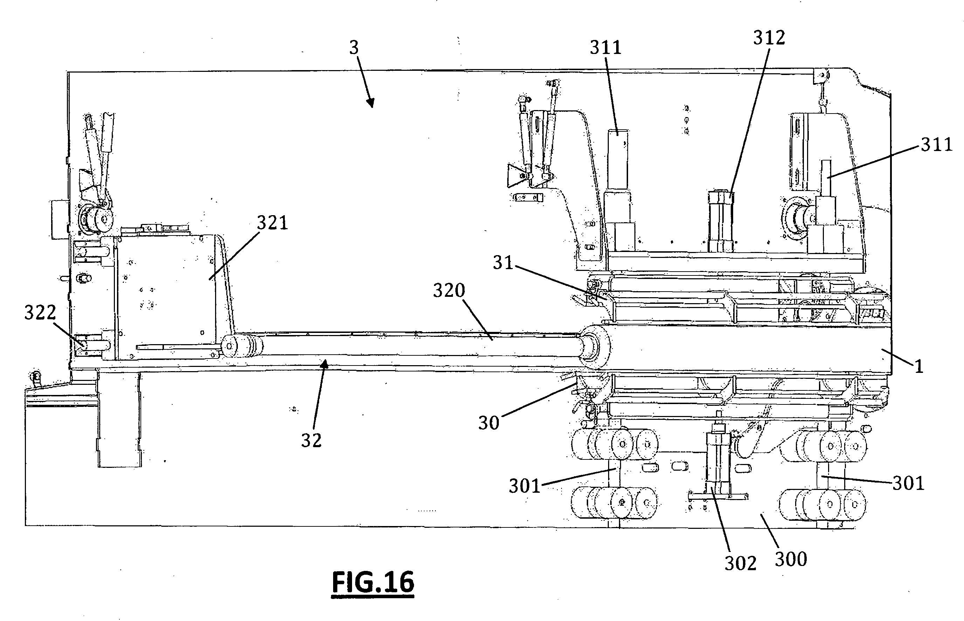

Le poste de guidage 3 est illustré schématiquement aux figures 4b, 5b, 8b, 9b, 10b et de façon plus détaillé en figure 16. Ce poste de guidage 3 comprend :
- un moyen de guidage inférieur 30 destiné à recevoir le saucisson 1 en sortie du poste d'entrée 2, ce moyen de guidage inférieur 30 se présentant sous la forme d'un support allongé de section transversale en « U » ;
- un moyen de guidage supérieur 31 disposé au-dessus et en regard du moyen de guidage inférieur 30, ce moyen de guidage supérieur 31 se présentant sous la forme d'un support allongé de section transversale en «U» ; et
- un moyen de déplacement 32 du saucisson 1 à l'intérieur des moyens de guidage 31, 32, ce moyen de déplacement 32 comprenant un poussoir 320 mobile en translation et conçu pour pousser le saucisson 1 guidé par les moyens de guidage 30, 31 en direction du poste de pelage 4.

Les moyens de guidage 30, 31 sont de forme sensiblement complémentaire au saucisson 1 et sont interchangeables avec d'autres moyens de guidage en fonction des saucissons 1 à peler. Les moyens de guidage 30, 31 s'étendent selon une direction longitudinale principale sensiblement horizontale.

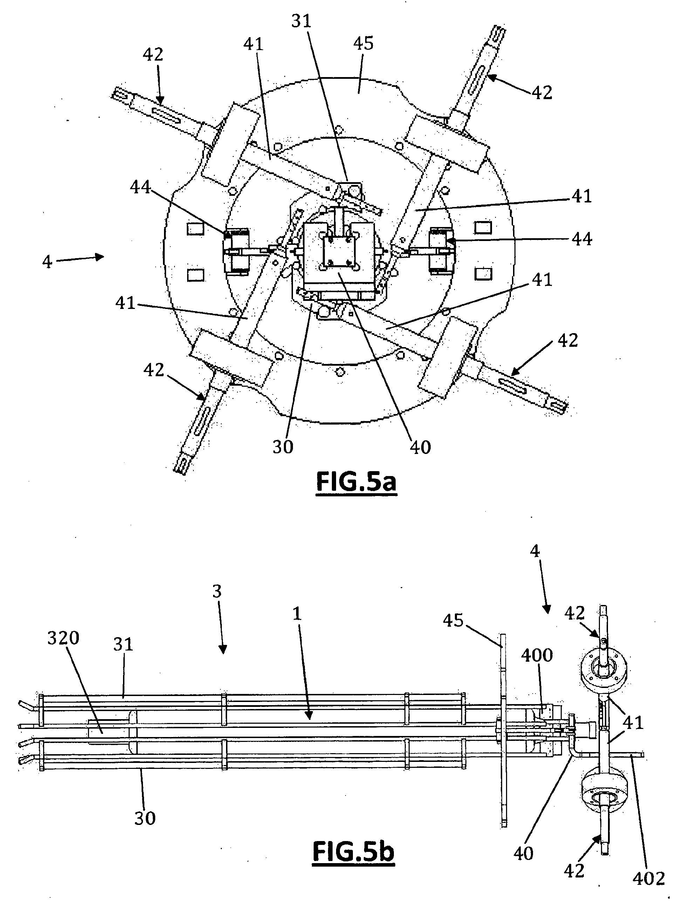

Le moyen de guidage inférieur 30 sert à récupérer le saucisson 1 en sortie du poste d'entrée 2, au centrage du saucisson 1 par rapport au poste de pelage 4, et au guidage en translation du saucisson 1 lorsque celui-ci est poussé par le poussoir 320. Le moyen de guidage inférieur 30 est monté coulissant sur un bâti inférieur 300 selon une direction verticale, au moyen de guides verticaux 301, et est relié à un actionneur 302, notamment du type vérin pneumatique, conçu pour déplacer le moyen de guidage inférieur 30 en translation verticale entre une position basse de réception de la saucisse 1 telle qu'illustrée en figure 4b et une position haute de guidage de la saucisse 1 en direction du poste de pelage 4 telle qu'illustrée en figure 5b, 8b, 9b et 10b.

Le moyen de guidage supérieur 31 sert notamment à tenir le saucisson 1 pendant la poussée du saucisson 1 en direction du poste de pelage 4 afin d'éviter que le saucisson 1 ne fléchisse pendant que le poussoir 320 exerce une pression sur le saucisson 1. Le moyen de guidage supérieur 31 est monté coulissant sur un bâti supérieur 310 selon une direction verticale, au moyen de guides verticaux 311, et est relié à un actionneur 312, notamment du type vérin pneumatique, conçu pour déplacer le moyen de guidage inférieur 31 en translation verticale entre une position haute lors de la réception de la saucisse 1 telle qu'illustrée en figure 4b, afin de permettre le passage du saucisson 1 du poste d'entrée au moyen de guidage inférieur 30, et une position basse de guidage de la saucisse 1 en direction du poste de pelage 4 telle qu'illustrée en figure 5b, 8b, 9b et 10b.

Le moyen de déplacement 32 comprend un actionneur 321, notamment du type moteur brushless, conçu pour déplacer le poussoir 320 en translation longitudinale horizontale, et un guide longitudinal 322 apte à guider le poussoir 320 en translation.

Le poste de pelage 4 du saucisson 1 est disposé dans le prolongement longitudinal du poste de guidage 3 et comprend :
- des moyens de coupe 40 conçus pour réaliser une entaille 12 en forme de croix dans la peau 11 du saucisson 1 à une extrémité du saucisson 1, dite extrémité avant, pour obtenir une ouverture délimitée par quatre rabats 13 ;
- quatre dispositifs de perçage 41 conçus pour percer respectivement la peau dans les quatre rabats 13 de peau, de part et d'autre de l'entaille 12 ;
- des moyens de pivotement 42 des quatre dispositifs de perçage 41 afin d'écarter les rabats 13 après perçage pour élargir l'ouverture ;
- des moyens d'éloignement/rapprochement 43 des dispositifs de perçage 41 par rapport au saucisson 1 ; et
- des moyens d'incision 44 de la peau 11 dans la direction longitudinale du saucisson 1.

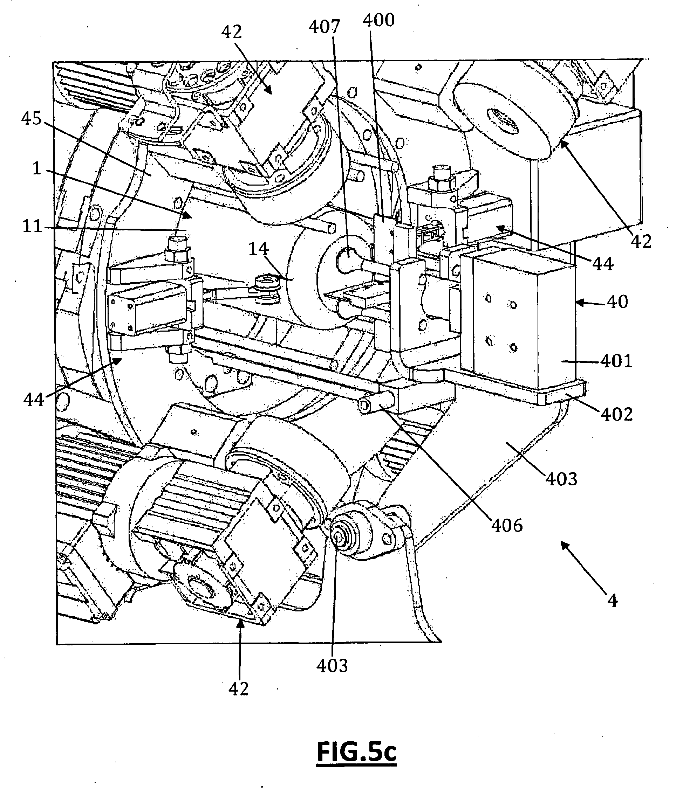

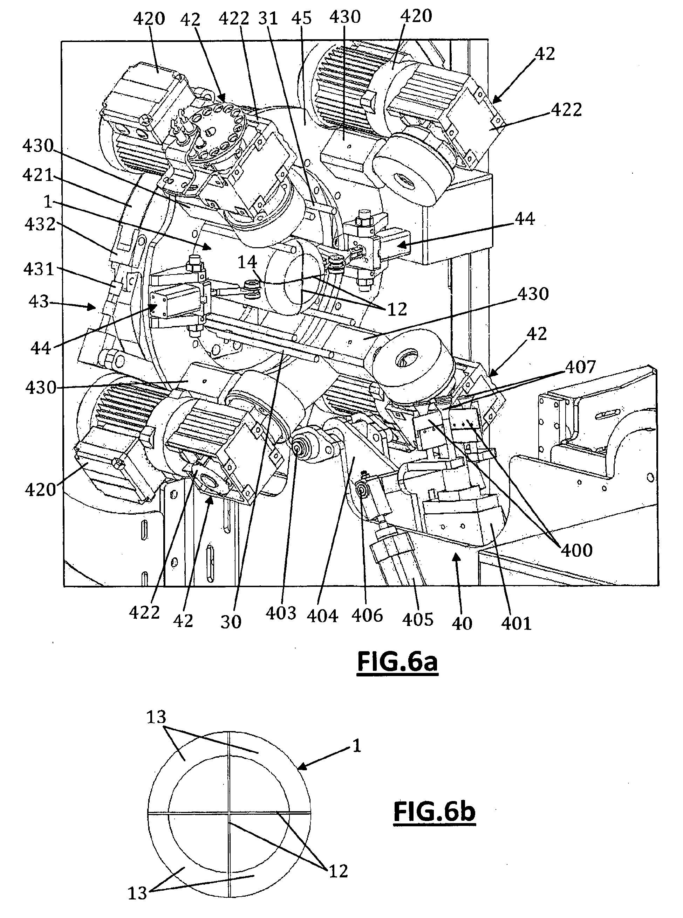

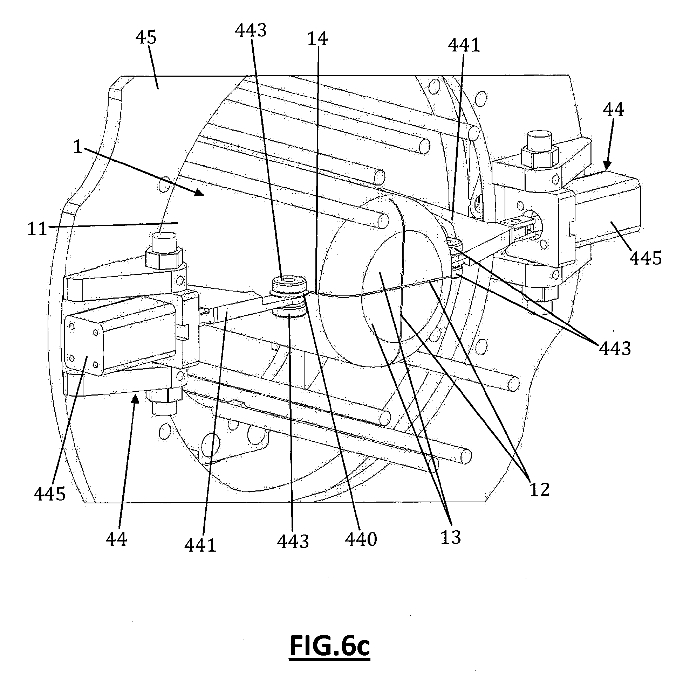

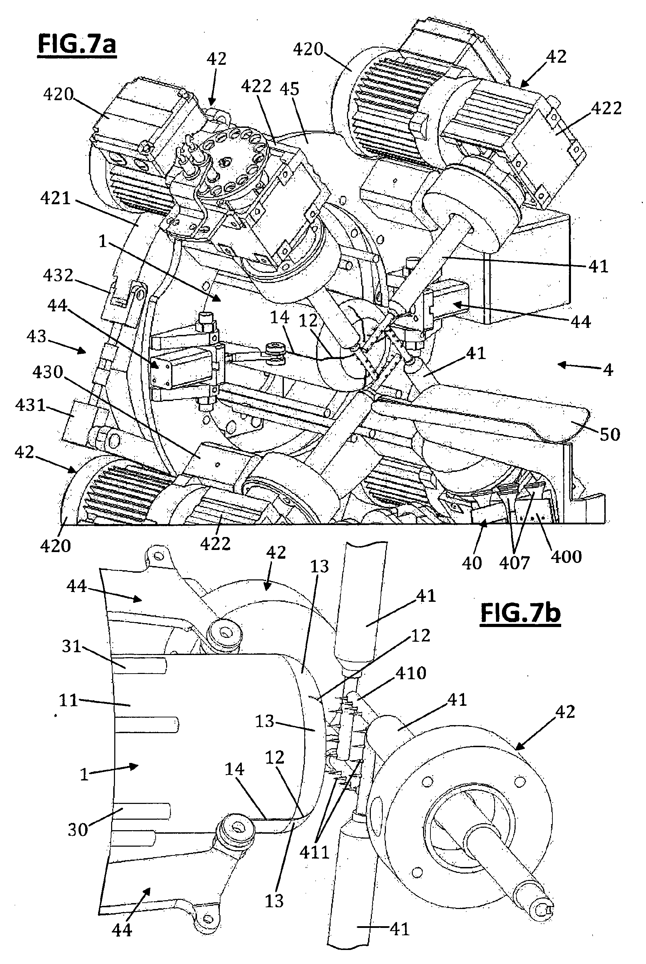

Les moyens de coupe 40 comprennent :
- un couteau 400 en forme de croix ;
- un actionneur 401, notamment du type vérin, conçu pour déplacer en translation le couteau 400 entre une position reculée de repos illustrée aux figures 5b et 5c, et une position avancée de coupe de l'extrémité avant du saucisson 1 ;
- un châssis 402 supportant l'actionneur 401 et le couteau 400 ;
- des organes formant butée 407 solidaires du châssis 402 et s'étendant parallèlement au couteau 400 ; et
- des moyen de pivotement du châssis 402, et donc du couteau 400, conçu pour faire pivoter le châssis 402 autour d'un axe 403 entre une position rabaissée dite de repos dans lequel le couteau 400 est escamoté ainsi qu'illustré aux figures 6 et 7a et une position relevée dans lequel le couteau 400 est disposé en regard de l'extrémité avant du saucisson 1 ainsi qu'illustré aux figures 5b et 5c.

Le couteau 400 comprend deux lames linéaires perpendiculaires, l'une verticale et l'autre horizontale, se croisant en leurs milieux respectifs afin de réaliser l'entaille 12 en forme de croix à l'extrémité avant du saucisson 1 ; cette entaille 12 présentant deux coupures linéaires et perpendiculaires entre elles, l'une verticale et l'autre horizontale, se coupant au niveau de l'axe longitudinal du saucisson 1. L'entaille 12 est ainsi délimitée par quatre rabats 13 de peau, séparés les uns des autres par l'entaille 12 ainsi qu'illustré en figure 6a.

L'actionneur 401 est conçu pour déplacer le couteau 400 en translation selon la direction longitudinale du saucisson 1 lorsque le châssis 402 est en position surélevée.

Les organes formant butée 407 sont au nombre de quatre et s'étendent entre les quatre secteurs délimités par les lames du couteau 400 en croix. Ces organes formant butée 407 s'étendent dans la direction de translation du couteau 400, et donc s'étendent selon la direction longitudinale du saucisson 1 lorsque le châssis 402 est en position surélevée comme visible aux figures 5b et 5c. Les organes formant butée 407 font saillie du couteau 400 lorsque ledit couteau 400 occupe la position reculée de repos. Les organes formant butée 407 sont conçus pour régler la profondeur de coupe du couteau 400.

Les moyens de pivotement du châssis 402 comprennent :
- un bras 404 articulé autour de l'axe 403 à une extrémité et solidaire du châssis 402 à son extrémité opposée ; et
- un actionneur 405, notamment du type vérin, agissant sur un levier 406 solidaire du châssis 402 pour entraîner en rotation ledit châssis 402.

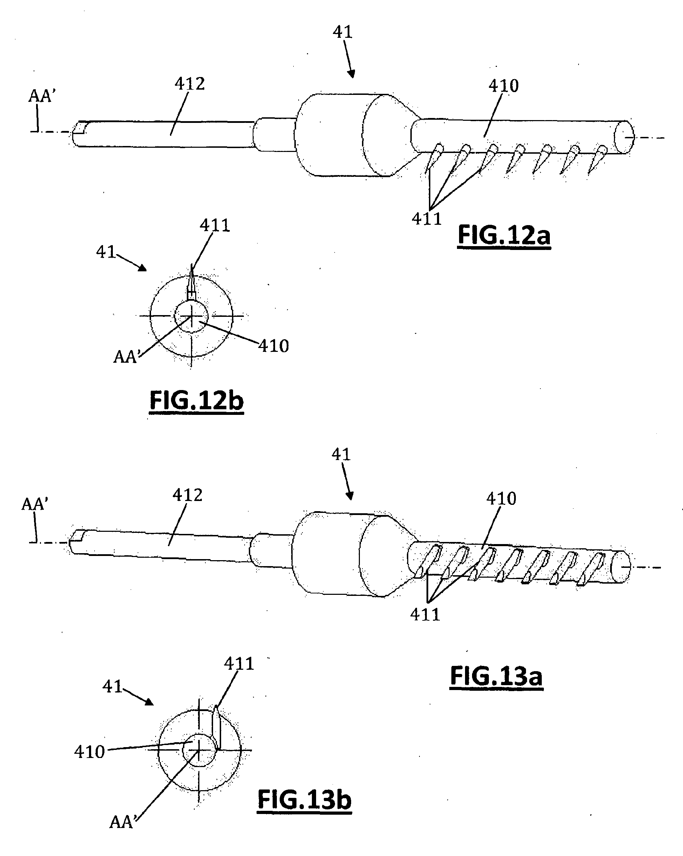

Les dispositifs de perçage 41, illustrés seuls aux figures 12a à 13b, comprennent :
- une embase 410 en forme de tige de section cylindrique s'étendant selon un axe principal AA' ;
- des pointes 411 solidaires de l'embase 410 et s'étendant transversalement à l'embase 411, lesdites pointes 411 s'étendant préférentiellement selon une direction perpendiculaire à l'axe principal AA' ;
- un bras 412 venant dans le prolongement de l'embase 410 et s'étendant selon l'axe principal AA'.

Les pointes 411 sont parallèles entre elles et sont régulièrement disposées le long de l'embase 410. De la sorte, les dispositifs de perçage 41 présentent une forme générale de râteau avec les pointes 411 formant des dents.

Dans le mode de réalisation des figures 12a et 12b, les pointes 411 présentent une forme générale tronconique avec une extrémité pointue, et elles s'étendent selon des axes respectifs croisant l'axe principal AA' ; on parle alors de pointes 411 axés ou de pointes en saillie radiale. Ces pointes 411 sont particulièrement bien adaptées pour les saucissons faciles à peler, où l'adhérence de la peau 11 sur la préparation alimentaire 10 est relativement faible.

Dans le mode de réalisation des figures 13a et 13b, les pointes 411 présentent une forme générale cylindrique avec une extrémité biseautée des deux côtés, et elles s'étendent selon des axes respectifs ne croisant pas l'axe principal AA' ; on parle alors de pointes 411 désaxés ou de pointes en saillie tangentielle. Ces pointes 411 sont particulièrement bien adaptées pour les saucissons délicats à peler, où l'adhérence de la peau 11 sur la préparation alimentaire 10 est relativement élevée.

Le bras 412 est conçu pour coopérer avec les moyens de pivotement 42 correspondants de sorte que lesdits moyens de pivotement 42 entraînent le bras 412 et le dispositif de perçage 41 en rotation autour de l'axe principal AA'. Les bras 412 sont conçus pour que les dispositifs de perçage 41 soient interchangeables, autrement dit les dispositifs de perçage 41 sont montés de façon amovible dans les moyens de pivotement 42 pour pouvoir interchanger les dispositifs de perçage 41 avec d'autres en fonction du saucisson 1 à peler.

Les moyens de pivotement 42 des dispositifs de perçage 41 sont conçus pour entraîner les dispositifs de perçage 41 en rotation autour des axes principaux AA' respectifs desdits dispositifs de perçage 41, et ils comprennent chacun:
- un actionneur 420 du type moteur rotatif selon un axe longitudinal, monté sur un support 421 ; et
- un système de transmission 422 conçu pour transmettre la commande de déplacement de l'actionneur 430 au dispositif de perçage 41 correspondant, autrement dit de convertir la rotation longitudinale en sortie de l'actionneur 420 en une rotation radiale, c'est-à-dire selon une direction inclinée à 90° par rapport à l'axe longitudinal.

Les moyens d'éloignement/ rapprochement 43 des dispositifs de perçage 41 par rapport au saucisson 1 sont conçus pour éloigner et rapprocher les quatre ensembles constitués des dispositifs de perçage 41 et des moyens de pivotement 42 associés par rapport au saucisson 1, autrement dit pour écarter ou rapprocher les dispositifs de perçage 41 vis-à-vis du saucisson 1 d'une distance déterminée.

Avec les moyens d'éloignement/rapprochement 43, les dispositifs de perçage 41 peuvent occuper les positions suivantes :
- une position écartée, illustrée aux figures 5a, 5b, 9a à 10c, dans laquelle les dispositifs de perçage 41 sont écartés ou éloignés du saucisson 1 ; et
- une position rapprochée, illustrée aux figures 7a à 8b, dans laquelle les dispositifs de perçage 41 sont rapprochés les uns des autres et rapprochés du saucisson 1, et plus particulièrement disposés en regard de l'extrémité avant du saucisson 1.

Comme illustré schématiquement aux figures 6a et 7a, ces moyens d'éloignement/rapprochement 43, au nombre de quatre, comprennent chacun :
- un actionneur 430 du type moteur rotatif selon un axe longitudinal, monté sur un bâti annulaire 45 du poste de pelage 4 entourant l'extrémité avant du saucisson 1 ; et
- un mécanisme de transmission 431 conçu pour transmettre la commande de déplacement de l'actionneur 430 au moyen de pivotement 42.

Dans le mode de réalisation des figures 6a et 7a, les moyens d'éloignement/rapprochement 43 sont conçus pour faire pivoter les moyens de pivotement 42 autour d'axe longitudinaux horizontaux, sensiblement parallèle au saucisson 1 en situation, conduisant ainsi à faire pivoter les dispositifs de perçage 41 dans le sens d'un éloignement par rapport au saucisson 1 ou dans le sens opposé d'un rapprochement par rapport au saucisson 1. Pour cela, chaque mécanisme de transmission 431 présente une première extrémité coopérant avec l'actionneur 430 rotatif et une deuxième extrémité 432 articulée sur le support 421 de l'actionneur 421 correspondant des moyens de pivotement 42.

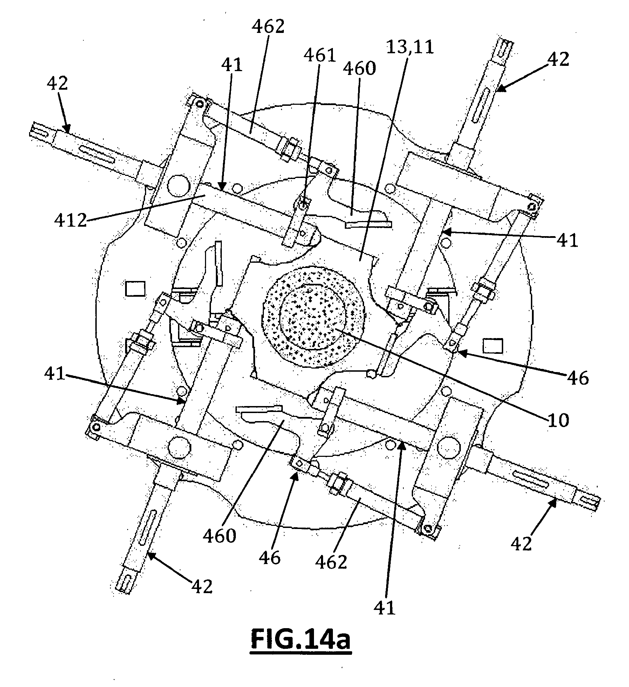

Dans un perfectionnement illustré aux figures 14a à 15b, les dispositifs de perçage 41 comprennent en outre des moyens de pincement 46 de la peau 11 de la peau directement sur les dispositifs de perçage 41 pour serrer les rabats 13 de peau directement sur lesdits dispositifs de perçage 41. Ces moyens de pincement 46 sont conçus pour pincer la peau 11 sur les embases 410 des dispositifs de perçage 41 pour serrer les rabats 13 de peau sur lesdites embases 410.

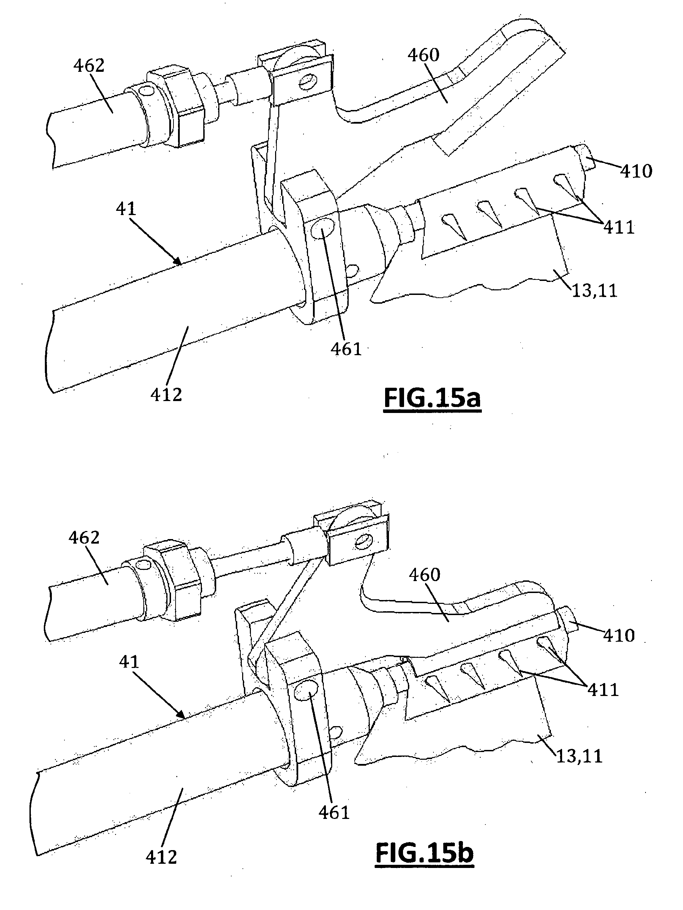

Ces moyens de pincement 46 comprennent :
- un organe de plaquage 460 monté à pivotement sur le bras 412 du dispositif de perçage 41 correspondant autour d'un axe 461 ;
- un actionneur 462, notamment du type vérin pneumatique, agissant sur l'organe de plaquage 460 pour l'entraîner en rotation entre une position ouverte, illustrée en figure 15a, dans laquelle l'organe de plaquage 460 est éloignée de l'embase 410, et une position fermée, illustrée en figure 15b, dans laquelle l'organe de plaquage 460 plaque le rabat 13 de peau contre l'embase 410.

L'organe de plaquage 460 se présente sous la forme d'un bras présentant, à une première extrémité, une surface d'appui de forme complémentaire à l'embase 410 afin d'épouser ladite embase 410 dans la position fermée et ainsi pincer le rabat 13 de peau entre l'embase 410 et ladite surface d'appui. L'organe de plaquage 13 présente une seconde extrémité, opposée à la première extrémité, reliée à l'actionneur 462.

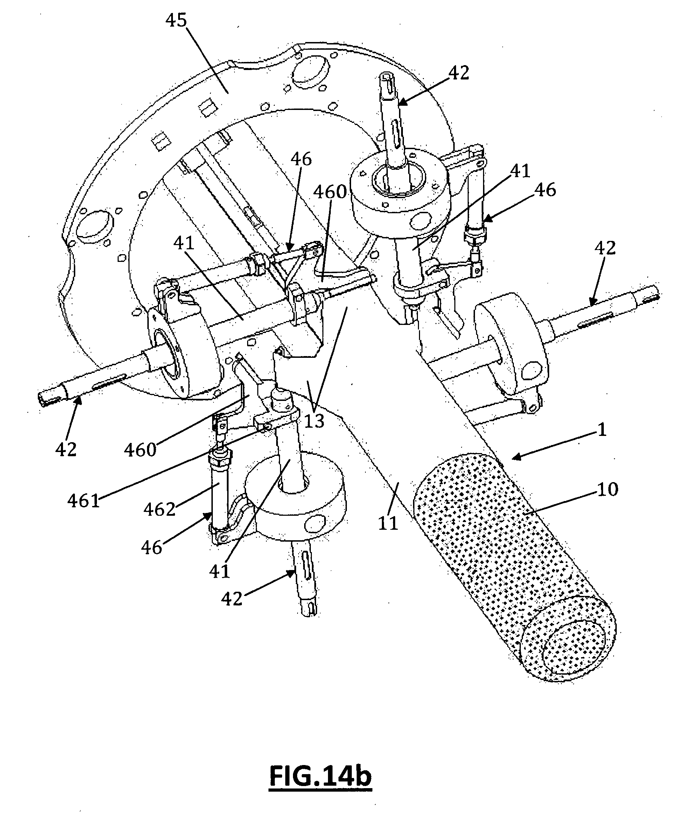

Sur les figures 14a et 14b, seul l'un des dispositifs de perçage 41 présente un moyen de pincement 46 en position ouverte afin d'illustrer les deux positions des moyens de pincement 46. Bien entendu, les moyens de pincement 46 occupent les mêmes positions aux mêmes étapes ou instants du procédé de pelage du saucisson 1.

Les moyens d'incision 44 de la peau 11 dans la direction longitudinale du saucisson 1 sont agencés pour cisailler la peau 11 au moins en partie le long du saucisson 1. Dans le premier mode de réalisation, les moyens d'incision 44 sont au nombre de deux et disposées de façon symétrique de part et d'autre du saucisson 1 pour réaliser des incisions 14 longitudinales.

Comme visible aux figures 6a, 6c, 7a et 7b, les moyens d'incision 44 sont agencés pour réaliser des incisions 14 venant dans le prolongement de la coupure horizontale de l'entaille 12 réalisée par le couteau 400, respectivement sur la droite et la gauche du saucisson 1.

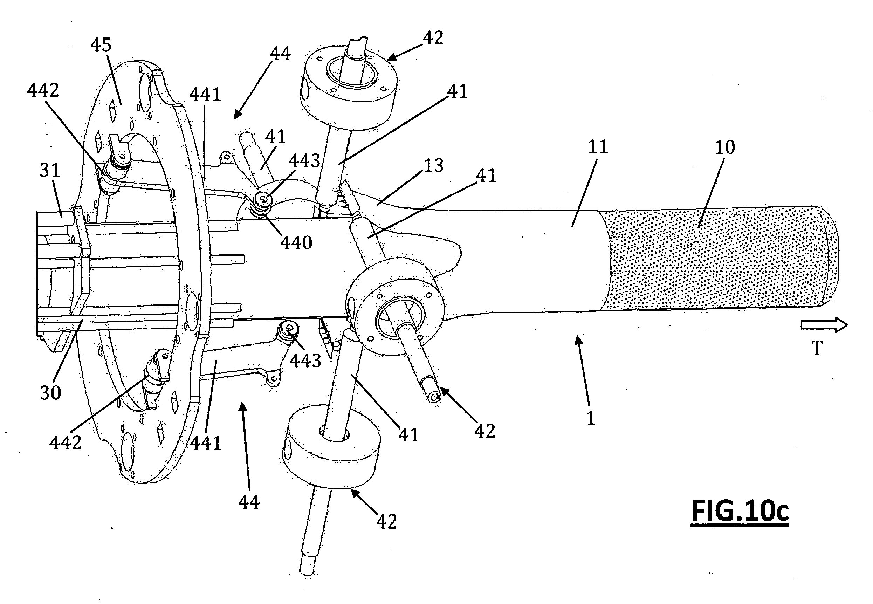

Chaque moyen d'incision 44 comprend, en référence aux figures 6c et 10c :
- une lame 440 fixée à une première extrémité d'un bras 441 ;
- le bras 441 présentant une seconde extrémité 442, opposée à la première extrémité, qui est articulée sur le bâti annulaire 45 autour d'un axe de rotation ;
- deux rouleaux 443 circulaires, notamment du type roulement palpeur, montés à rotation sur la première extrémité du bras 441 et disposés de part et d'autre de ladite lame 440 pour éviter une incision trop profond dans le saucisson 1 ;
- un actionneur 444 du type vérin, notamment du type vérin pneumatique, monté sur le bâti annulaire 45 et relié audit bras 441 pour commander le pivotement du bras 441 autour de l'axe de rotation situé à sa seconde extrémité 442.

Les moyens d'incision 44 sont mobiles entre une position de repos, illustrée à la figure 10c, dans laquelle la lame 440 est située à distance de la peau 11 du saucisson 1 et une position d'incision, illustrée aux figures 6c, 7a et 7b, dans laquelle la lame 440 est en contact avec la peau 11 du saucisson afin d'y pratiquer une incision 14 pendant le déplacement du saucisson 1.

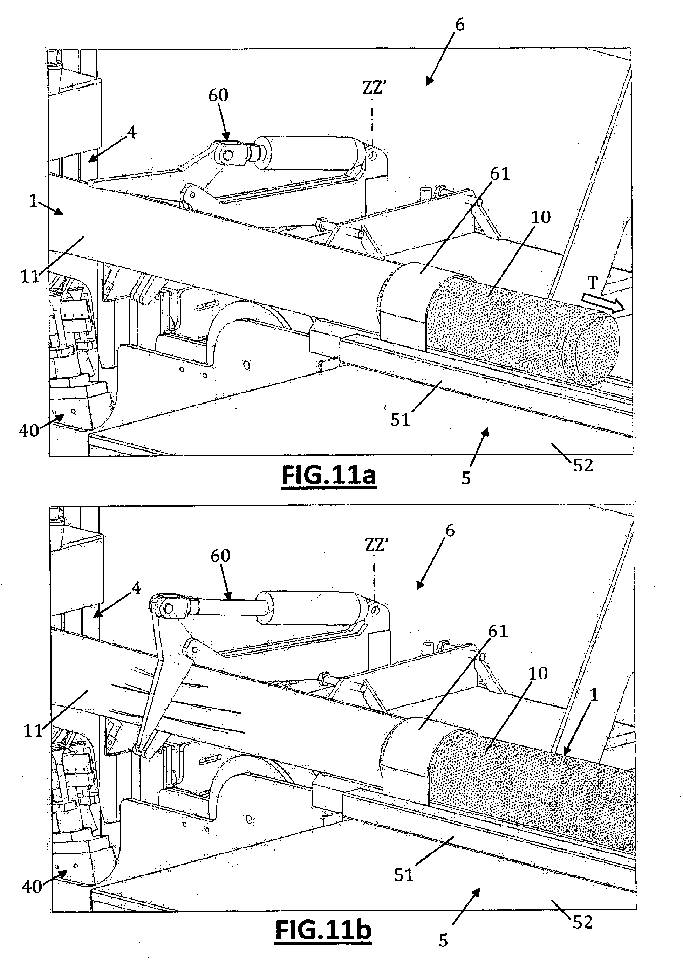

Le poste de sortie 5 de la saucisse 1 après pelage comprend :
- un moyen de transfert 50 de la saucisse 1 en sortie du poste de pelage 4, ce moyen de transfert 50 se présentant sous la forme d'une goulotte allongée, visible en figure 7a, de section transversale en U ;
- une ligne de convoyage 51, visible en figure 11, située à distance du poste de pelage 4 et s'étendant de façon longitudinale dans l'alignement des moyens de guidage 30, 31 ;
- un tapis roulant 52, visible aux figures 1 et 11, sur lequel est transféré le saucisson pelé en sortie de la ligne de convoyage 51.

La goulotte 50 de transfert est mobile entre deux positions :
- une position rabaissée dite de repos dans laquelle la goulotte 50 est escamotée ; et
- une position relevée dite de transfert, illustrée en figure 7a, dans laquelle la goulotte 50 s'étend longitudinalement entre le poste de pelage 4 et la ligne de convoyage 51 fixe afin de supporter et guider le saucisson 1 poussé par le poussoir 320 en direction de la ligne de convoyage 51.

La goulotte 50 peut occuper la position relevée de transfert lorsque le couteau 400 est en position rabaissée de repos, et inversement le couteau 400 peut occuper la position relevée lorsque la goulotte 50 occupe la position rabaissée de repos.

Le poste d'évacuation 6 de la peau 11 du saucisson 1 comprend, en référence aux figures 11a et 11b :
- une pince d'évacuation 60, notamment du type pneumatique, disposée sur le côté entre le poste de pelage 4 et la ligne de convoyage 51 ; et
- une sangle 61 de maintien du saucisson pelé, et plus particulièrement de la préparation alimentaire 10 mise à nue après pelage.

La sangle 61 est disposée sur la ligne de convoyage 51 et peut occuper deux positions, à savoir :
- une position desserrée, illustrée en figure 11a, dans laquelle la sangle 61 est relâchée autour du saucisson pelé de sorte que ledit saucisson pelé peut passer à travers la sangle 61 et glisser sur la ligne de convoyage 51 ; et
- une position serrée, illustrée en figure 11b, dans laquelle la sangle 61 est serrée autour du saucisson pelé de sorte que ledit saucisson pelé est plaqué et maintenu en place contre la ligne de convoyage 51 par la sangle 61.

La pince d'évacuation 60 est mobile en rotation autour d'un axe vertical ZZ' et peut occuper au moins deux positions, à savoir :
- une position de repos, non illustrée, dans laquelle la pince d'évacuation 60 est déportée sur le côté par rapport au saucisson 1 ; et
- une position de travail, illustrée aux figures 11a et 11b, dans laquelle la pince d'évacuation 60 est disposée autour de la peau 11 du saucisson, qui est tendue entre les dispositifs de perçage 41 et l'extrémité arrière du saucisson, pour pouvoir saisir pincer la peau 11 par pincement, comme visible en figure 11b, une fois que la sangle 61 est en position serrée.

Ainsi, la pince d'évacuation 60 est conçue pour attraper uniquement la peau 11 du saucisson 1 lorsque ce dernier est quasiment entièrement pelé et lorsque la goulotte 50 est en position rabaissée, pour ensuite évacuer la peau 11 dans un bac (non illustré) disposé en bord de ligne ; la sangle 61 maintenant la préparation 10 du saucisson 1 en place pour éviter que la pince d'évacuation 60 n'entraîne la préparation 10 en question pendant qu'elle pivote avec la peau 11 pincée en direction du bac et qu'elle finit ainsi de tirer sur la peau 11 pour l'ôter du saucisson.

Le fonctionnement de l'appareil de pelage selon le premier mode de réalisation et les différentes étapes du procédé de pelage pour un tel appareil sont décrits ci-après.

Au préalable, la ligature ou ficelle de l'extrémité avant du saucisson 1 est retirée, par exemple en coupant la peau 11 au niveau de cette ligature.

Le saucisson 1 est ensuite déposé sur le tapis roulant 20 du poste d'entrée 2 pour s'engager dans le moyen de guidage inférieur 30.

Dans une première étape illustrée aux figures 4a et 4b, le saucisson 1 est réceptionné dans le moyen de guidage inférieur 30 qui est en position basse, tandis que le moyen de guidage supérieur 31 est en position haute.

Dans une deuxième étape illustrée aux figures 5a à 5c, le moyen de guidage inférieur 30 est déplacé en position basse, tandis que le moyen de guidage supérieur 31 est déplacé en position haute, le poussoir 320 pousse le saucisson 1 contre les organes formant butée 407 des moyens de coupe ; lesdits moyens de coupe 40 étant en position surélevée.

Lors de cette deuxième étape, les dispositifs de perçage 41 sont en position écartée afin de ne pas gêner l'accès de l'extrémité avant aux moyens de coupe 40, et les moyens d'incision 44 sont en position d'incision afin d'initier les incisions 14 sur les côtés du saucisson 1.

Ensuite, le couteau 400 en forme de croix est pressé contre l'extrémité avant du saucisson 1, au moyen de l'actionneur 401, afin d'y pratiquer l'entaille 12 en forme de croix.

Dans une troisième étape illustrée aux figures 6a et 6c, les moyens de coupe 40 sont ramenés en position rabaissée de repos.

Dans une quatrième étape illustrée aux figures 7a et 7b, la goulotte 50 est amenée dans la position relevée et les dispositifs de perçage 41 sont amenés dans la position rapprochée avec les embases 410 en regard de l'extrémité avant du saucisson 1 et les pointes 411 dirigées en direction du saucisson 1 ; les moyens d'incision 44 restant en position d'incision afin de prolonger les incisions 14 sur les côtés du saucisson 1.

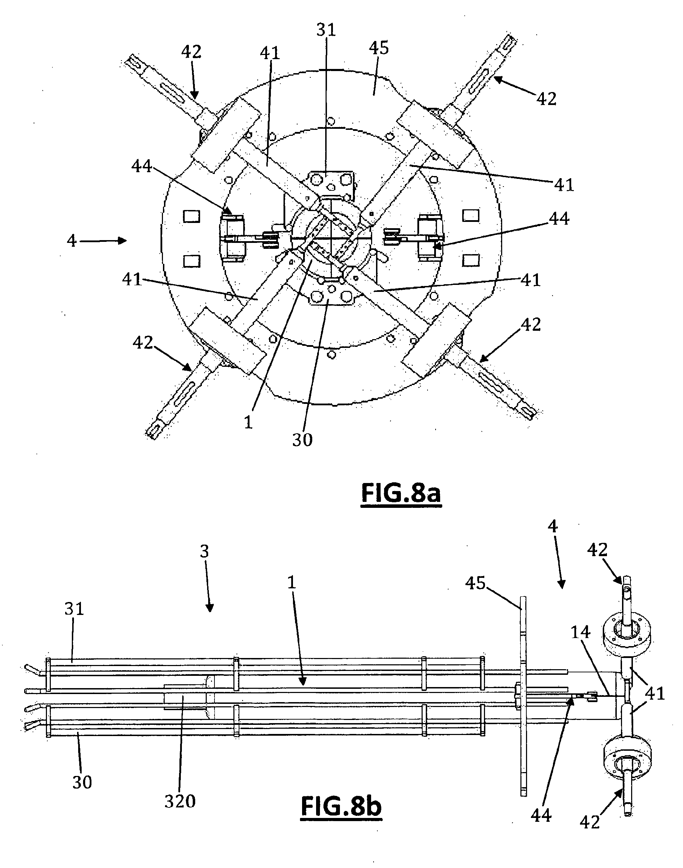

Dans une cinquième étape illustrée aux figures 8a et 8b, le poussoir 320 pousse le saucisson 1 de sorte que les pointes 411 percent la peau 11 du saucisson 1 à son extrémité avant.

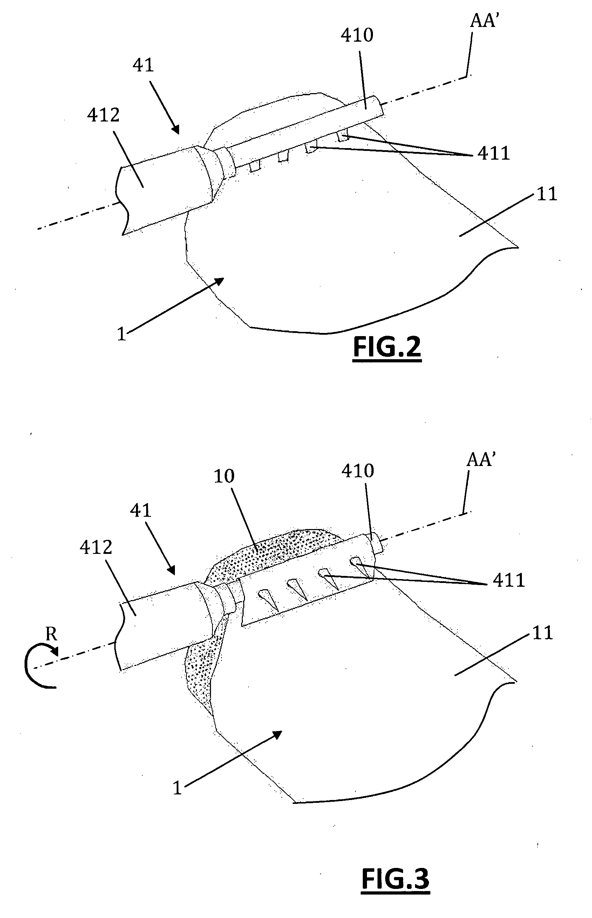

Lors de cinquième cette étape, les rabats 13 sont percés par les pointes 411 des dispositifs de perçage 41 en pressant le saucisson contre ces dispositifs de perçage 41. La poussée du saucisson 1 est telle que les embases 410 des dispositifs de perçage 41 viennent en contact avec la peau du saucisson 1 ; les perçages de la peau 11 par les pointes 411 étant faits sur toute la longueur des pointes 411. La figure 2 illustre un exemple dans lequel les pointes 411 percent la peau 11 du saucisson 1.

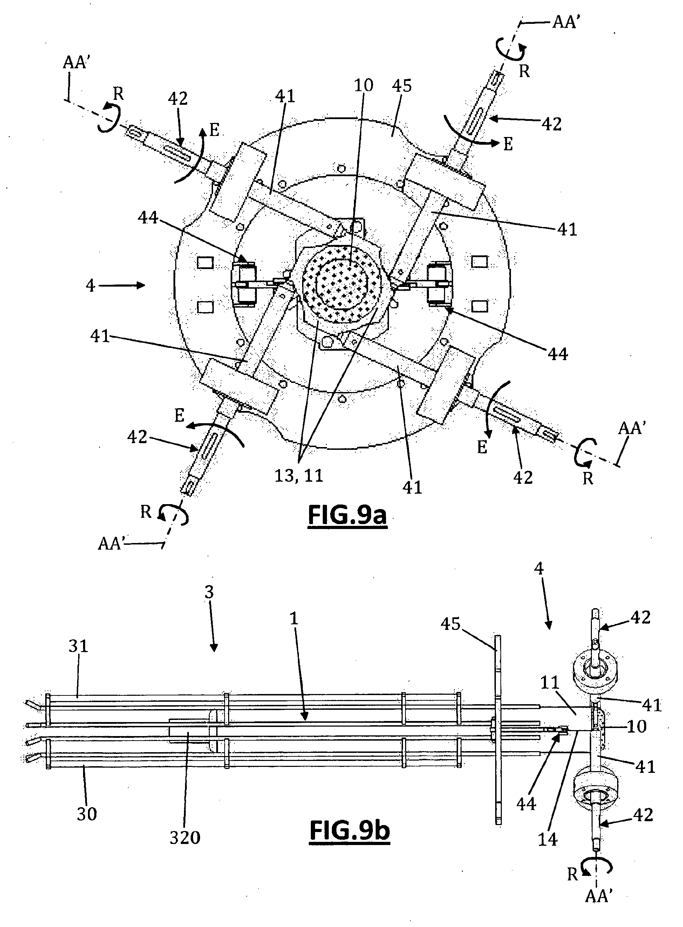

Dans une sixième étape illustrée aux figures 9a et 9b, les dispositifs de perçage 41 sont entraînés en rotation par les moyens de pivotement 42 autour des axes principaux AA' respectifs desdits dispositifs de perçage 41, ainsi qu'illustré par les flèches R sur la figure 9a. De la sorte, les pointes 411 pivotent et écartent ainsi les rabats 13 délimitant l'entaille 12, écartant de ce fait l'ouverture de passage de la préparation alimentaire 10 hors de la peau 11. La figure 3 illustre un exemple dans lequel les dispositifs de perçage 41 ont pivoté pour décoller la peau 11 de la préparation alimentaire 10 et ainsi initier le pelage du saucisson 1.

La rotation des dispositifs de perçage 41 se fait sur un tour complet. Au cours de la rotation des dispositifs de perçage 41, le poussoir 320 pousse le saucisson 1 sur une distance prédéterminée et les dispositifs de perçage 41 sont ramenés dans la position écartée, ainsi qu'illustré par les flèches E sur la figure 9a, afin de favoriser le tirage des rabats 13 de peau et plus particulièrement tendre les rabats 13 de peau, ce qui favorisera ensuite le pelage du saucisson 1.

Après cette étape de rotation, il est envisageable de pincer la peau 11 directement sur les dispositifs de perçage 41 au moyen des moyens de pincement 46, afin de serrer les rabats 13 de peau 11 directement sur les dispositifs de perçage 41.

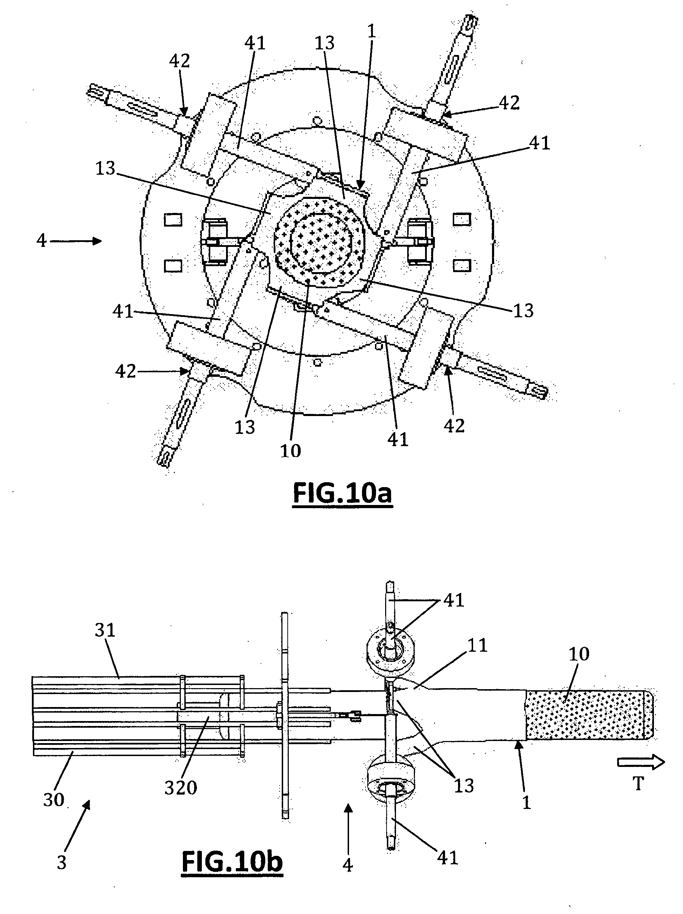

Dans une septième étape illustrée aux figures 10a à 10c, le poussoir 320 pousse le saucisson 1, ainsi qu'illustré par les flèches T sur les figures 10b et 10c, tandis que les rabats 13 de peau restent accrochés sur les dispositifs de perçage 41, conduisant ainsi au pelage du saucisson 1 dans le sens de la longueur ; l'accrochage des rabats 13 de peau sur les dispositifs de perçage 41 étant éventuellement renforcé grâce aux moyens de pincement 46.

Pendant cette poussée, les moyens d'incision 44 restent en position d'incision et les dispositifs de perçage 41 restent en position écartée. Lors de cette étape, le saucisson 1 est supporté par la goulotte 50 et la préparation alimentaire 10 glisse sur la ligne de convoyage 51 tandis que la sangle 61 est en position desserrée.

Dans une huitième étape illustrée en figure 11a, la goulotte 50 est ramenée en position rabaissée et la pince d'évacuation 60 est amenée en position de travail tout en restant ouverte. La pince d'évacuation 60 encadre ainsi la peau 11 tendue entre les dispositifs de perçage 41 et la préparation alimentaire 10 qui avance sous l'effet de la poussée du poussoir 320 à l'extrémité arrière du saucisson.

Dans une neuvième étape illustrée en figure 11b, la préparation alimentaire 10 du saucisson 1 a été poussé suffisamment loin sur la ligne de convoyage 51 de sorte que le poussoir 320 recule et retourne en position initiale, puis la sangle 61 est amenée en position serrée autour de la préparation 10, et enfin la pince d'évacuation 60 se ferme et pince la peau 11 tendue.

Dans une dixième étape non illustrée, la pince d'évacuation 60 pivote autour de son axe vertical ZZ ', tirant ainsi le reste de peau 11 qui adhérait encore sur la préparation alimentaire 10 pour finalement évacuer la peau 11 dans un bac. Ensuite, la sangle 61 bascule en position desserrée et la préparation alimentaire 10 est évacuée sur le tapis roulant 52 du poste de sortie 5.

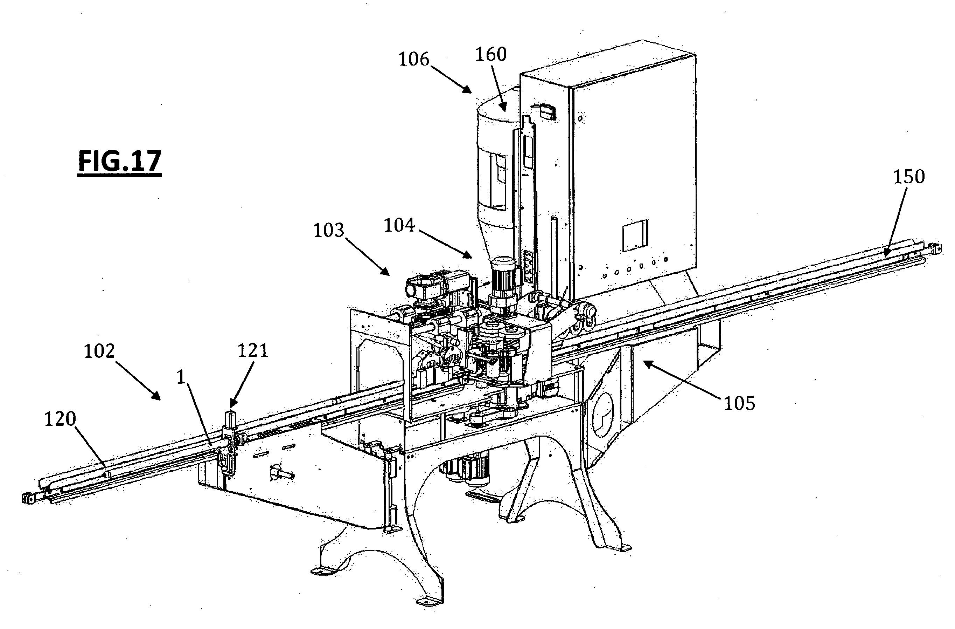

La seconde partie de la description porte sur le second mode de réalisation d'un appareil conforme à l'invention et est faite en référence aux figures 17 à 25c. Cet appareil est particulièrement adapté pour les saucissons de section circulaire présentant un diamètre de l'ordre de 2,5 à 6 cm ou des saucissons de section carrée présentant un côté de l'ordre de 2,5 à 6 cm, avec une longueur de l'ordre de 50 cm à 2 m voire plus.

Comme illustré en figure 17, cet appareil de retrait de la peau d'un saucisson comprend les postes successifs suivants :
- un poste d'entrée 102 de la saucisse avant pelage ;
- un poste de guidage 103 de la saucisse ;
- un poste de pelage 104 de la saucisse ;
- un poste de sortie 105 de la saucisse après pelage ;
- un poste d'évacuation 106 de la peau.

Le poste d'entrée 102 comprend une ligne de convoyage d'entrée 120 longitudinale, notamment du type tapis roulant à chevrons, sur lequel est déposé le saucisson avant d'atteindre le poste de guidage 103.

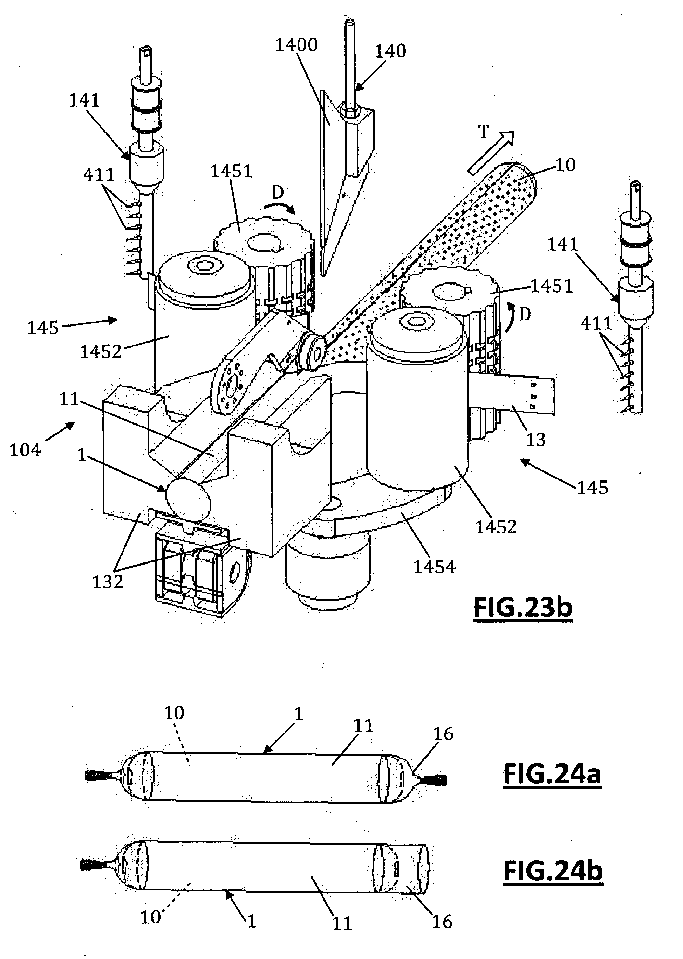

Le poste d'entrée 102 comprend en outre une unité de soufflage 121 destiné à décoller la peau 11 à l'extrémité avant du saucisson 1. Cette unité de soufflage 121 est conçue pour ouvrir le col 16 de peau, initialement ligaturé ou ficelé, à l'extrémité avant du saucisson 1, autrement dit pour faire passer le saucisson 1 de l'état illustré schématiquement en figure 24a à celui illustré schématiquement en figure 24b.

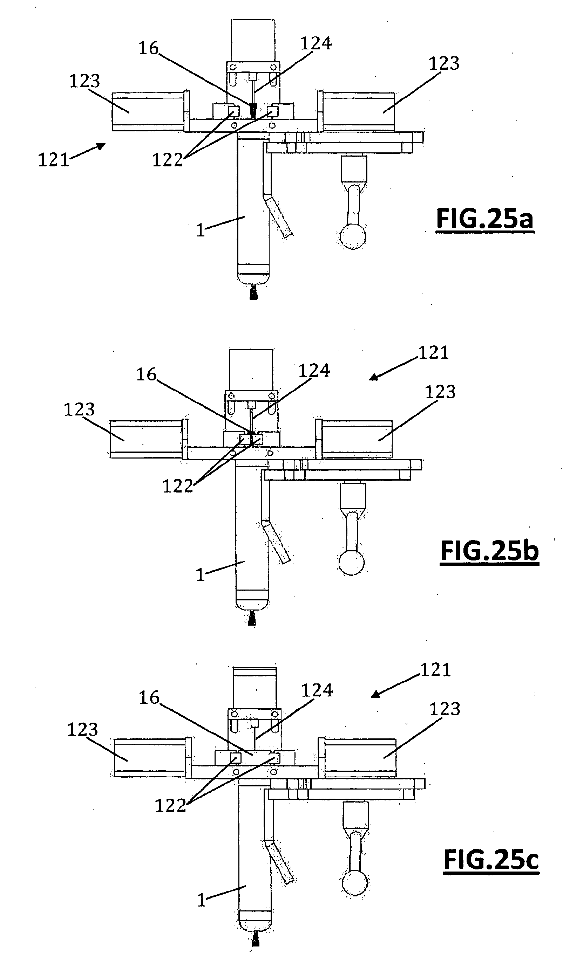

La description qui suit de cette unité de soufflage 121 est faite en référence 25a à 25b. Cette unité de soufflage 121 comprend :
- deux presseurs 122 conçus pour serrer le col 16 de peau à l'extrémité avant du saucisson 1, lesdits presseurs 122 étant réalisés en matière élastique, notamment en caoutchouc, pour réaliser un serrage étanche du col 16,
- deux actionneurs 123 conçus pour déplacer les respectivement deux presseurs 122 entre une position ouverte, illustrée aux figures 25a et 25c, et une position fermée, illustrée en figure 25b, dans laquelle les presseurs 122 serrent le col 16 ;
- un conduit de soufflage 124 relié à un système de production d'air comprimé et conçu pour injecter de l'air comprimé à l'intérieur du col 16 entre la peau 11 et la préparation alimentaire 10 et ainsi décoller la peau du col.

L'étape de décollage de la peau du col 16 dans l'unité de soufflage 121 s'effectue en trois phases décrites ci-dessous en référence aux figures 25a à 25c.

Dans une première phase illustrée en figure 25a, le saucisson 1 est disposé sur l'unité de soufflage 121 de sorte que le col 16 soit positionné entre les presseurs 122 qui occupent une position ouverte, et que le conduit de soufflage 124 pénètre à l'intérieur du col 16.

Dans une deuxième phase illustrée en figure 25b, les presseurs 122 sont déplacés par les actionneurs 123 dans la position fermée, et ensuite le conduit de soufflage 124 injecte de l'air comprimé dans le col 16.

Dans une troisième phase illustrée en figure 25c, les actionneurs 123 ramènent les presseurs 122 en position ouverte ; la peau du col 16 étant désormais décollé de la préparation alimentaire 10.

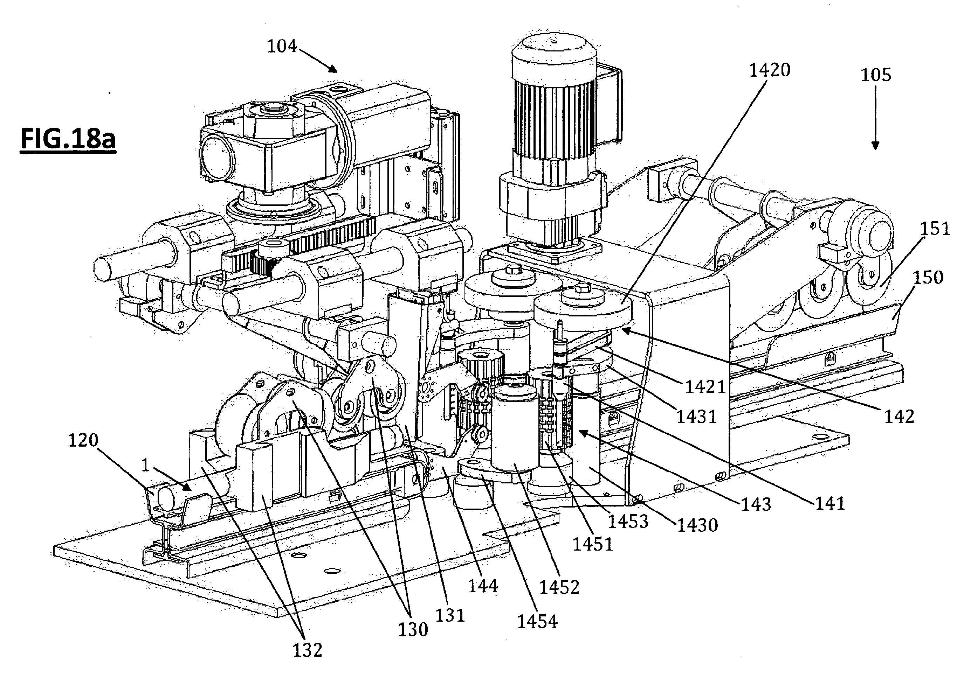

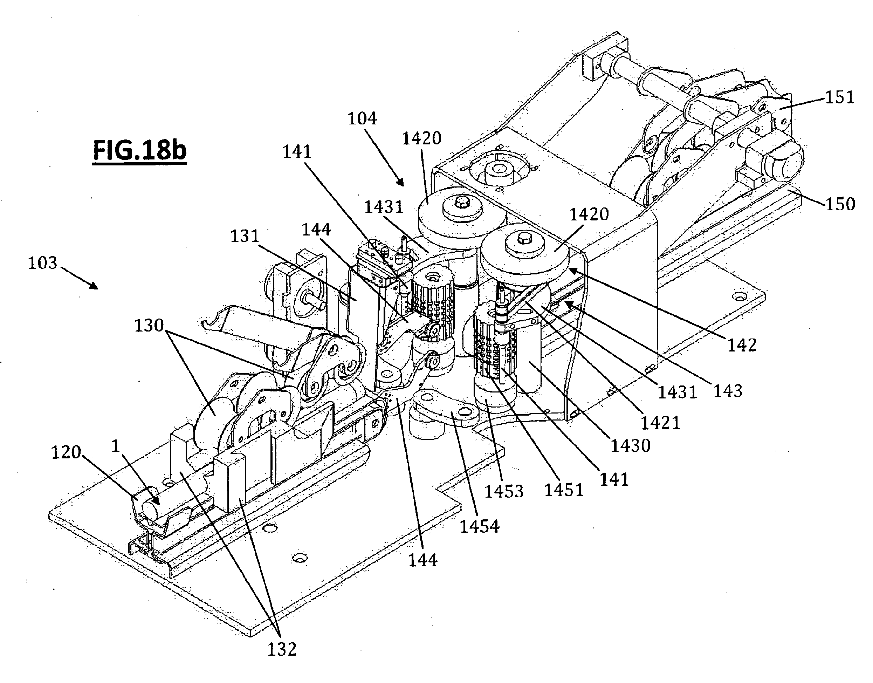

Le poste de guidage 103 comprend, en référence aux figures 18a et18b:
- un système de presseur 130 comprenant des rouleaux rotatifs disposés au-dessus de la ligne de convoyage d'entrée 120 et conçus pour presser le saucisson 1 contre la ligne de convoyage d'entrée 120 et ainsi favoriser l'introduction du saucisson 1 dans le poste de pelage 104 ;
- un butée 131 escamotable mobile entre une position basse, illustrée aux figures 18a et 18b, dans laquelle la butée 131 est positionnée en regard de l'extrémité avant du saucisson 1 de sorte que le saucisson 1 circulant sur la ligne de convoyage d'entrée 120 vient en appui contre la butée 131, et une position haute dans laquelle la butée 131 est relevée et laisse le passage au saucisson 1 en direction du poste de pelage 104 ; et
- une pince mobile 132 conçue pour déplacer le saucisson 1 en complément de la ligne de convoyage d'entrée 120, ladite pince mobile 132 étant pourvue de deux mors opposés, disposés de part et d'autre de la ligne de convoyage d'entrée 120 afin de pouvoir enserrer le saucisson 1 sur ses côtés, ladite pince mobile 132 étant mobile en translation longitudinale afin d'engager le saucisson 1 dans le poste de pelage 14.

Ainsi, l'appareil de pelage comprend des moyens de déplacement du saucisson 1 qui comprennent notamment la ligne de convoyage d'entrée 120 et la pince mobile 132, ainsi qu'une ligne de convoyage de sortie 150 qui sera décrite ultérieurement.

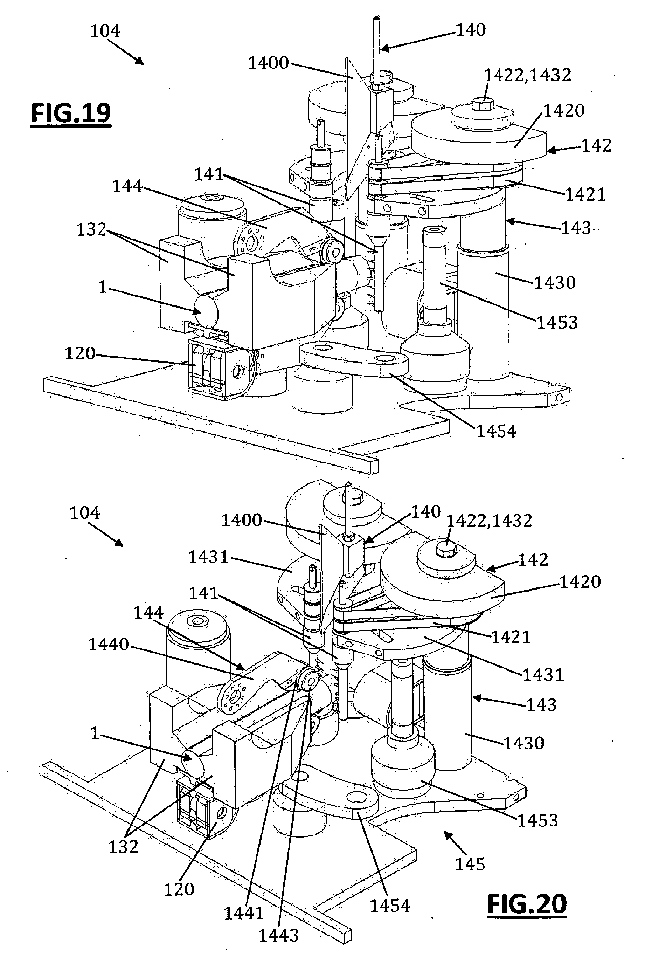

La pince mobile 132 est mobile une position reculée, illustrée aux figures 18a et 18b, dans laquelle l'extrémité avant du saucisson 1 est en appui contre la butée 131, et une position avancée, illustrée aux figures 19 à 21b, dans laquelle l'extrémité avant du saucisson 1 est engagée dans le poste de pelage 104.

La pince mobile 132 a pour fonction de prendre le saucisson 1 une fois quel l'extrémité avant dudit saucisson 1a atteint la butée 131, et ensuite d'avancer le saucisson 1 de façon précise, en terme de distance, dans le poste de pelage 104 après que la butée 131 ait atteinte la position haute.

Les mors de la pince mobile 132 sont démontables et interchangeables avec d'autres mors afin de pouvoir adapter les dimensions et la forme des mors au saucisson 1 à peler.

Le poste de pelage 104 du saucisson 1 est disposé dans le prolongement longitudinal du poste de guidage 103 et de la ligne de convoyage d'entrée 120 et comprend :
- des moyens de coupe 140 conçus pour réaliser une entaille 12 linéaire et verticale dans la peau 11 du saucisson 1 à l'extrémité avant du saucisson 1 pour obtenir une ouverture délimitée par deux rabats 13 ;
- deux dispositifs de perçage 141 conçus pour percer respectivement la peau dans les deux rabats 13 de peau, de part et d'autre de l'entaille 12 ;
- des moyens de pivotement 142 des deux dispositifs de perçage 141 afin d'écarter les rabats 13 après perçage pour élargir l'ouverture ;
- des moyens d'éloignement/rapprochement 143 des dispositifs de perçage 141 par rapport au saucisson 1 ;
- des moyens d'incision 144 de la peau 11 dans la direction longitudinale du saucisson 1 ; et
- des moyens de serrage 145 des rabats de peau pourvus de deux organes de serrage 1451, 1452 ; et
- des moyens de mise en rotation (non illustrés) de l'un des organes de serrage 1451 afin de permettre le tirage des rabats de peau après serrage des rabats entre les organes de serrage.

Les moyens de coupe 140 comprennent :
- un couteau 1400 réalisé sous la forme d'une lame linéaire ;
- un actionneur (non illustré), notamment du type vérin, conçu pour déplacer en translation verticale le couteau 1400 entre une position haute, dans laquelle le couteau 1400 est escamoté, et une position basse de coupe de l'extrémité avant du saucisson 1, permettant ainsi au couteau 1400 de réaliser une coupe de haut en bas de l'extrémité avant du saucisson.

Les dispositifs de perçage 141 sont du même type que les dispositifs de perçage 41 décrits ci-dessus pour le premier mode de réalisation de l'appareil, et comprennent de même une embase 410 s'étendant selon un axe principal AA' et qui supporte une série de pointes 411 saillantes transversalement de l'embase 411, et un bras 412 venant dans le prolongement de l'embase 410

Les dispositifs de perçage 141 sont parallèles entre eux et s'étendent selon l'axe principal AA' qui est sensiblement vertical. Ces dispositifs de perçage 141 sont disposés de façon symétrique, de part et d'autre du saucisson, afin de pouvoir percer la peau du saucisson sur ses côtés.

Les moyens de pivotement 142 des dispositifs de perçage 141 sont conçus pour entraîner les dispositifs de perçage 141 en rotation autour des axes principaux AA' verticaux respectifs desdits dispositifs de perçage 141, et ils comprennent chacun :
- un actionneur du type moteur rotatif 1420 selon un axe vertical 1422 ; et
- un système de transmission 1421 conçu pour transmettre la commande de rotation du moteur rotatif 1420 au dispositif de perçage 141 correspondant, autrement dit de convertir la rotation verticale en sortie du moteur rotatif 1420 en une rotation verticale des dispositifs de perçage 141.

Comme visible aux figures 18a à 20, chaque système de transmission 1420 est réalisé sous la forme d'une transmission par courroie comprenant au moins une courroie engrenant, d'une part, avec un arbre de sortie du moteur rotatif 1420 et, d'autre part, avec le dispositif de perçage 141 correspondant.

Les moyens d'éloignement/rapprochement 143 des dispositifs de perçage 141 par rapport au saucisson 1 sont conçus pour éloigner et rapprocher les deux dispositifs de perçage 141 par rapport au saucisson 1, autrement dit pour écarter ou rapprocher les dispositifs de perçage 141 vis-à-vis du saucisson 1 d'une distance déterminée.

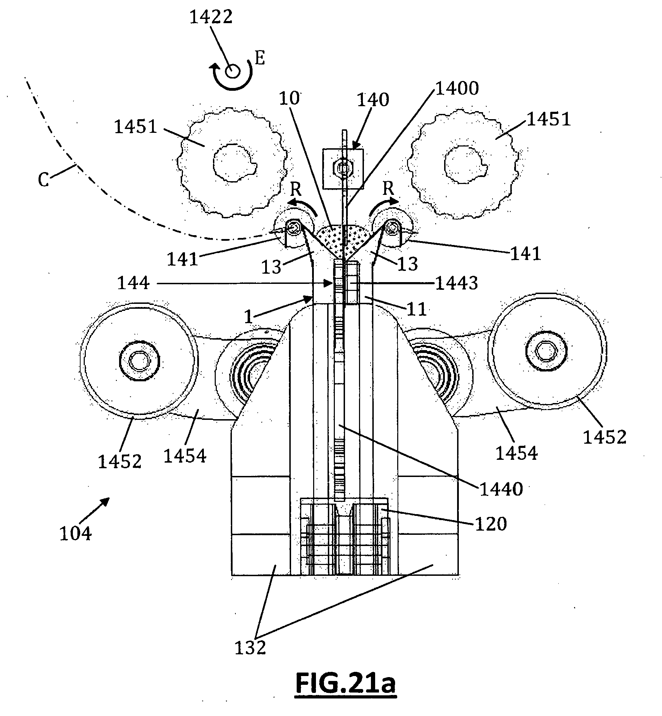

Avec les moyens d'éloignement/rapprochement 143, les dispositifs de perçage 41 peuvent occuper les positions suivantes :
- une position rapprochée, illustrée en figure 20, dans laquelle les dispositifs de perçage 41 percent la peau 11 du saucisson 1 ;
- une succession de positions écartées, illustrée respectivement aux figures 21a, 22a et 23a, dans laquelle les dispositifs de perçage 141 sont plus ou moins écartés ou éloignés du saucisson 1.

Comme illustré schématiquement aux figures 18a à 20, ces moyens d'éloignement/rapprochement 143, au nombre de deux, comprennent chacun :
- un actionneur du type moteur rotatif 1430 selon un axe vertical 1432 ; et
- un mécanisme de transmission 1431 conçu pour transmettre la commande de rotation du moteur rotatif 1430 au dispositif de perçage 141 correspondant.

Les moyens d'éloignement/rapprochement 143 sont conçus pour faire pivoter les dispositifs de perçage 141 autour des axes verticaux 1432 respectifs, conduisant ainsi chaque dispositif de perçage 141 à suivre une trajectoire circulaire C, illustrée aux figures 21a, 22a et 23a, qui est centrée autour des axes verticaux.

Dans le mode de réalisation des figures 18a à 20, le moteur rotatif 1430 est disposé dans l'alignement du moteur rotatif 1420 et les axes verticaux 1422 et 1432 sont confondus.

Les moyens d'éloignement/rapprochement 143 sont conçus pour entraîner en rotation les moyens de pivotement 142 avec les dispositifs de perçage 141. En l'occurrence, les moyens d'éloignement/rapprochement 143 supportent les moyens de pivotement 142 respectifs

Chaque mécanisme de transmission 1431 se présente sous la forme d'un bras dont une première extrémité coopère avec le moteur rotatif 1430 et une deuxième extrémité supportant le dispositif de perçage 141 correspondant, de sorte que la rotation du moteur rotatif 1430 entraîne celle du bras de transmission 1431 et donc celle du dispositif de perçage 141 correspondant.

Les moyens d'incision 144 de la peau 11 dans la direction longitudinale du saucisson 1 sont agencés pour cisailler la peau 11 au moins en partie le long du saucisson 1. Dans le second mode de réalisation, les moyens d'incision 144 sont au nombre de deux et disposées de façon symétrique respectivement en-dessous et au-dessus du saucisson 1 pour réaliser des incisions 14 longitudinales sur respectivement dessous et dessus le saucisson 1.

Les moyens d'incision 144 sont agencés pour réaliser des incisions 14 venant dans le prolongement de la coupure verticale de l'entaille 12 réalisée par le couteau 1400, respectivement sur le dessous et le dessus du saucisson.

Comme visible aux figures 18a à 23b, chaque moyen d'incision 144 comprend :
- une lame 1440 fixée à une première extrémité d'un bras 1441 ;
- le bras 1441 présentant une seconde extrémité, opposée à la première extrémité, qui est articulée sur un bâti ;
- un rouleau 1443 circulaire, notamment du type roulement palpeur, monté à rotation sur la première extrémité du bras 1441 pour éviter une incision trop profond dans le saucisson 1 ; et
- un actionneur (non visible) du type vérin monté sur le bâti et relié audit bras 1441 pour commander le pivotement du bras 1441.

Les moyens de serrage 145 sont conçus pour serrer les deux rabats 13 de peau après la saisie des rabats de peau par les dispositifs de perçage 141 (suite au perçage et au pivotement) et un premier éloignement des dispositifs de perçage 141. Chaque moyen de serrage 145 comprend pour cela un premier organe de serrage 1451 et un second organe de serrage 1452.

Chaque premier organe de serrage 1451 se présente sous la forme d'un rouleau rotatif cranté monté sur un support vertical 1453.

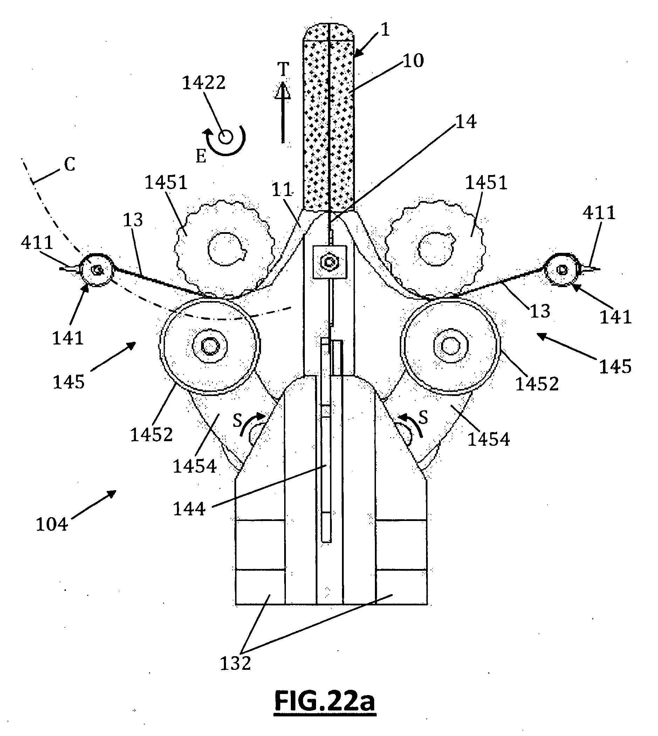

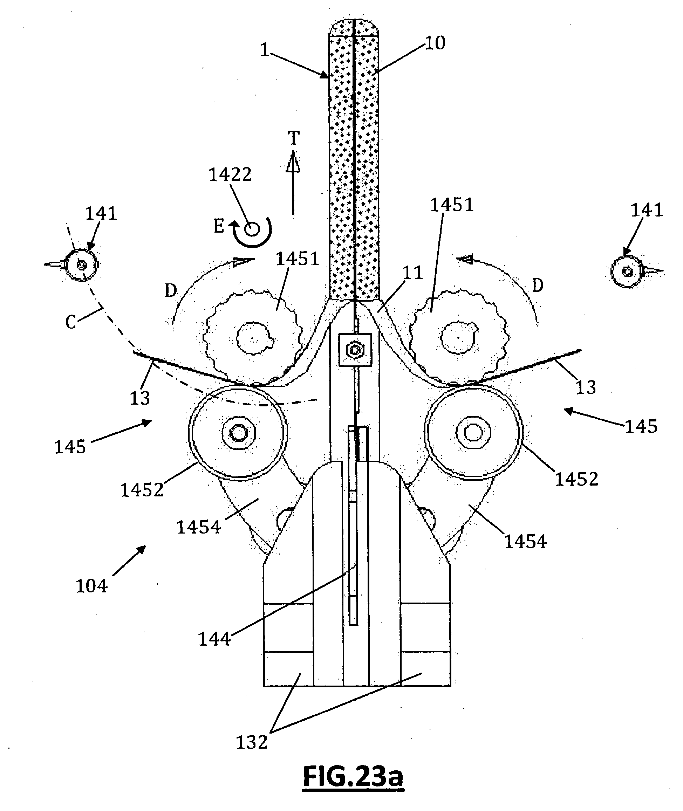

Chaque second organe de serrage 1452 se présente sous la forme d'un rouleau monté à rotation sur un bras 1454 autour d'un axe vertical, où ledit bras est commandé en rotation de sorte que chaque second organe de serrage 1452 est mobile entre deux positions, à savoir
- une position de repos, telle qu'illustrée aux figures 18a et 21a, dans laquelle le second organe de serrage 1452 est éloignée du premier organe de serrage 1451 pour permettre le passage du dispositif de perçage 141 correspondant entre les deux organes de serrage 1451, 1452 lorsque ledit dispositif de perçage 141 suit sa trajectoire circulaire C d'éloignement ; et
- une position de serrage, telle qu'illustrée aux figures 22a, 23a et 23b, dans laquelle les organes de serrage 1451, 1452 serrent entre eux les rabats de peau du saucisson une fois les dispositifs de perçage 141 éloignés du saucisson 1 par les moyens d'éloignement/rapprochement 143.

Les moyens de mise en rotation sont conçus pour entraîner en rotation les premiers organes de serrage 1451 respectifs autour d'axes verticaux, en particulier lorsque les seconds organes de serrage 1452 occupent leurs positions de serrage afin de permettre le tirage des rabats de peau concomitamment à l'avancée du saucisson 1 ; les organes se serrage jouant alors le rôle de dérouleur.

Le poste de sortie 105 de la saucisse 1 après pelage comprend, en référence aux figures 17 à 18b :
- une ligne de convoyage de sortie 150 longitudinale, notamment du type tapis roulant à chevrons, sur lequel est transféré le saucisson en sortie du poste de pelage 104 ; et
- un système de presseur 151 comprenant des rouleaux rotatifs disposés au-dessus de la ligne de convoyage de sortie 150 et conçus pour presser le saucisson pelé contre la ligne de convoyage de sortie 150 et ainsi favoriser le déplacement du saucisson 1 en sortie du poste de pelage 104.

Le poste d'évacuation 106 de la peau 11 du saucisson 1 comprend, en référence à la figure 1, un système d'aspiration 160, notamment du type système à aspiration cyclonique, disposé à proximité du poste de pelage 104, pourvu de deux canalisations d'aspiration (non visibles) débouchant au niveau des moyens de serrage 145 pour aspirer les bandes de peau tirés par ces moyens de serrage 145.

Le fonctionnement de l'appareil de pelage selon le second mode de réalisation et les différentes étapes du procédé de pelage pour un tel appareil sont décrits ci-après.

Dans un premier temps, la ligature ou ficelle de l'extrémité avant du saucisson 1 est retirée, par exemple en coupant la peau 11 au niveau de cette ligature.

Dans un deuxième temps, le saucisson 1 est engagé dans l'unité de soufflage 121 afin de réaliser les trois phases de l'étape de décollage de la peau du col 16 décrites ci-dessus en référence aux figures 25a à 25c.

Dans un troisième temps, le saucisson 1 est déposé sur la ligne de convoyage d'entrée 120 du poste d'entrée 102 pour ensuite s'engager entre les mors de la pince mobile 132 et sous le système de presseur 130 qui favorise et guide le déplacement du saucisson en direction de la butée 131 qui occupe la position basse.

Les étapes suivantes sont décrites en référence aux figures 18a à 23b.

Dans une première étape illustrée aux figures 18a et 18b et appelée étape de présentation du saucisson, l'extrémité avant du saucisson 1 arrive en appui contre la butée 131 et exerce un effort contre celle-ci, déclenchant ainsi la fermeture des mors de la pince mobile 132. Au niveau du poste de pelage 104, les dispositifs de perçage 141 occupent une position écartée, le couteau 1400 occupe une position haute et les seconds organes de serrage 1452 des moyens de serrage 145 sont en position de repos.

Dans une deuxième étape illustrée en figure 19 et appelée étape d'avancée du saucisson dans le poste de pelage et de coupage de la peau, la butée 131 remonte pour atteindre la position haute et ensuite la pince mobile 132 se déplace en translation longitudinale en direction du poste de pelage 104 sur une distance prédéterminée afin d'amener le saucisson 1 dans une position de référence prédéterminée ; la pince mobile 132 restant fermée pour maintenir le saucisson 1 dans cette position de référence. Lors de cette deuxième étape, les dispositifs de perçage 141 restent en position écartée et les moyens d'incision 144 sont en position d'incision afin d'initier les incisions 14 sur les dessous et dessus du saucisson 1.

Ensuite, le couteau 1400 descend en position basse afin de réaliser une entaille 12 verticale en coupant la peau de haut en bas à l'extrémité avant du saucisson, puis retourne en position haute.

Dans une troisième étape illustrée en figure 20 et appelée étape d'approche des dispositifs de perçage et de perçage de la peau du saucisson, les dispositifs de perçage 141 sont déplacés en direction du saucisson 1 avec les moyens d'éloignement/rapprochement 143 qui font pivoter lesdits dispositifs de perçage 141 autour des axes verticaux 1432 respectifs ; les pointes 411 étant dirigées en direction du saucisson 1 selon une direction sensiblement transversale au saucisson 1, et les moyens d'incision 144 restant en position d'incision afin de prolonger les incisions 14 sur les côtés du saucisson 1.

Ensuite, les moyens d'éloignement/rapprochement 143 continuent rapprocher les dispositifs de perçage 141 jusqu'à ce que les pointes 411 percent la peau 11 du saucisson 1. Lors de cette étape, les rabats 13 sont percés par les pointes 411 des dispositifs de perçage 41 en pressant les dispositifs de perçage 141 contre ces rabats de peau. Le rapprochement des dispositifs de perçage 141 est tel que les embases 410 des dispositifs de perçage 141 viennent en contact avec la peau 11 du saucisson 1 ; les perçages de la peau 11 par les pointes 411 étant faits sur toute la longueur des pointes 411.

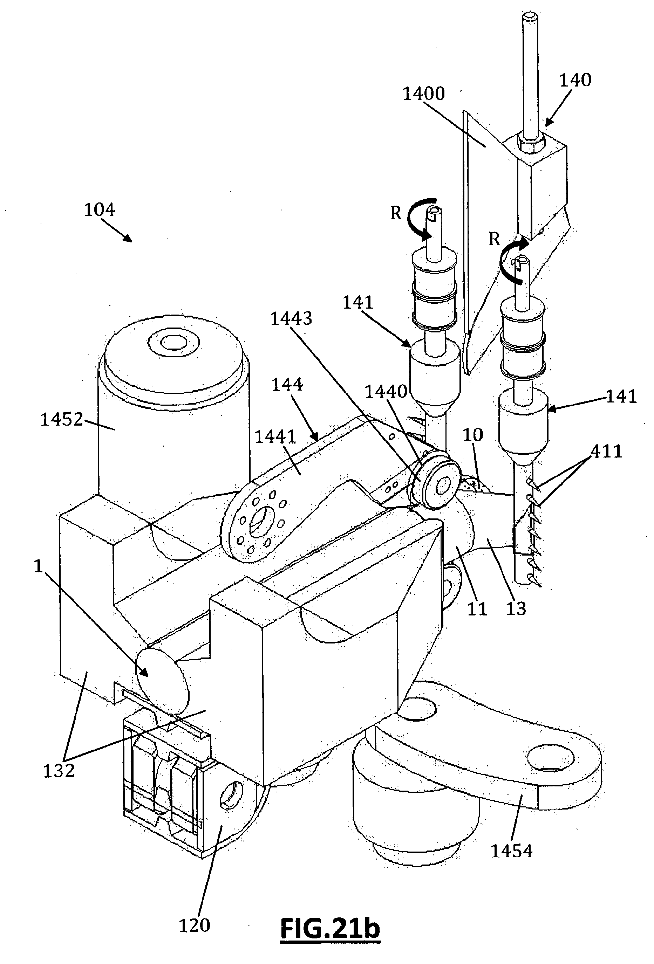

Dans une quatrième étape illustrée aux figures 21a et 21b et appelée étape de rotation des dispositifs de perçage et de décollage de la peau, les dispositifs de perçage 141 sont entraînés en rotation par les moyens de pivotement 142 autour des axes principaux AA' respectifs desdits dispositifs de perçage 141, ainsi qu'illustré par les flèches R sur les figures 21a et 21b. De la sorte, les pointes 411 pivotent et écartent ainsi les deux rabats 13 délimitant l'entaille 12 verticale, écartant de ce fait l'ouverture de passage de la préparation alimentaire 10 hors de la peau 11. Ainsi, les dispositifs de perçage 41 ont pivoté sur eux-mêmes pour décoller la peau 11 de la préparation alimentaire 10 et ainsi initier le pelage du saucisson 1.

La rotation des dispositifs de perçage 141 se fait sur un demi-tour. Au cours de la rotation des dispositifs de perçage 141, les mors de la pince mobile 132 s'ouvrent, par exemple de quelques millimètres, pour libérer le saucisson 1 qui reprend alors son déplacement longitudinal sous l'effet de la ligne de convoyage d'entrée 120, et les moyens d'éloignement/rapprochement 143 commencent à éloigner les dispositifs de perçage 141, ainsi qu'illustré par les flèches E sur la figure 21a, afin de favoriser le tirage des rabats 13 de peau.

Sous l'effet des cisaillements de la peau en-dessous et au-dessus par les moyens d'incision 144 et du tirage des rabats de peau par les dispositifs de perçage 141, les rabats 13 de peau se séparent l'un de l'autre et forment respectivement des bandes de peau accrochées aux dispositifs de perçage 141 respectifs

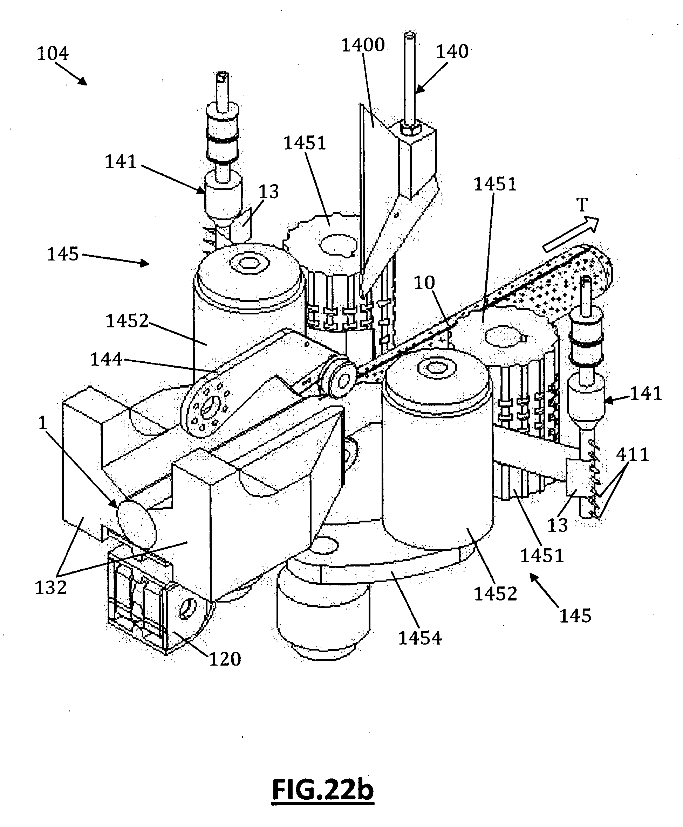

Dans une cinquième étape illustrée aux figures 22a et 22b et appelée étape de serrage de la peau, les dispositifs de perçage 141 poursuivent leurs éloignements respectifs en suivant leurs trajectoires circulaires C sous l'effet des moyens d'éloignement/rapprochement 143, et passent ainsi entre les organes de serrage 1451, 1452 respectifs ; les seconds organes de serrage 1452 occupant encore leurs positions de repos.

Ensuite, les seconds organes de serrage 1452 sont déplacés en position de serrage, ainsi qu'illustré par les flèches S sur la figure 22a, de sorte que les rabats ou bandes 13 de peau sont serrés entre les organes de serrage 1451, 1452.

Lors de cette cinquième étape, le saucisson 1 continue à avancer selon une translation longitudinale, ainsi qu'illustré par les flèches T sur les figures 22a et 22b, sous l'effet de la seule ligne de convoyage d'entrée 120 puis sous l'effet combiné des deux lignes de convoyage 120 et 150, tandis que les rabats 13 de peau restent accrochés sur les dispositifs de perçage 41 puis serrés entre les organes de serrage 1451, 1452, conduisant ainsi au pelage du saucisson 1 dans le sens de la longueur.

Dans une sixième étape illustrée aux figures 23a et 23b et appelée étape de déroulage de la peau, les dispositifs de perçage 141 poursuivent leurs éloignements respectifs en suivant leurs trajectoires circulaires C sous l'effet des moyens d'éloignement/rapprochement 143, jusqu'à ce que les rabats 13 de peau se décrochent des dispositifs de perçage 141 ; les rabats 13 de peau restant serrés ou coincés entre les organes de serrage 1451, 1452. Les organes de serrage 1451, 1452 prennent ainsi le relais des dispositifs de perçage 141 pour maintenir les rabats de peau pendant le pelage du saucisson.

Ensuite, les premiers organes de serrage 1451 sont entraînés en rotation par leurs moyens de mise en rotation respectifs, ainsi qu'illustré par les flèches D sur les figures 23a et 23b, formant ainsi des dérouleurs qui entraînent la peau 11 en même temps que le saucisson 12 avance, ce qui a pour effet de favoriser et accélérer le pelage de saucisson 1. Une telle étape est particulièrement avantageuse pour permettre de passer des longueurs de peau de plus de deux mètres, autrement dit de peler des saucissons de plus de deux mètres.

Le système d'aspiration 160 du poste d'évacuation 106 aspire les rabats 13 de peau au fur et à mesure du déroulage des rabats de peau par les organes de serrage 1451, 1452.

Bien entendu les exemples de mise en oeuvre évoqués ci-dessus ne présentent aucun caractère limitatif et d'autres détails et améliorations peuvent être apportés à l'appareil et au procédé de pelage selon l'invention, sans pour autant sortir du cadre de l'invention où d'autres formes de moyens de coupe et/ou de dispositifs de perçage et/ou de moyens de pivotement des dispositifs de perçage et/ou de moyens de déplacement relatif du produit par rapport aux dispositifs de perçage et/ou de moyens d'éloignement/rapprochement des dispositifs de perçage et/ou de moyens de serrage et/ou de moyens de pincement peuvent être réalisées.

Les moyens de pincement 46 décrits pour le premier mode de réalisation de l'appareil de pelage peuvent par exemple être envisagés pour le second mode de réalisation de l'appareil de pelage.

Les moyens de serrage 145 des rabats de peau décrits pour le second mode de réalisation de l'appareil de pelage peuvent par exemple être envisagés pour le premier mode de réalisation de l'appareil de pelage.

## Revendications

1. Procédé de retrait de la peau (11) d'un produit (1) alimentaire, tel qu'un saucisson ou une saucisse, s'étendant selon une direction longitudinale, comprenant les étapes suivantes :
a) réalisation d'au moins une entaille (12) dans la peau (11) à une extrémité du produit (1) pour obtenir une ouverture délimitée par au moins deux rabats ;
b) perçage de la peau (11) de part et d'autre de ladite entaille (12) au moyen de dispositifs de perçage (41 ; 141) ;
c) pivotement des dispositifs de perçage (41 ; 141) afin d'écarter des rabats (13) délimitant ladite entaille (12) pour élargir ladite ouverture ;
d) déplacement relatif du produit (1) par rapport aux dispositifs de perçage (41 ; 141) dans la direction longitudinale du produit (1).

2. Procédé selon la revendication 1, comprenant, après l'étape c) de pivotement des dispositifs de perçage (41 ; 141), une étape c1) d'éloignement des dispositifs de perçage (41 ; 141) par rapport au produit (1) pour laisser le passage au produit (1) lors de l'étape d) de déplacement relatif.

3. Procédé selon la revendication 2, comprenant, après l'étape c1) d'éloignement des dispositifs de perçage (141), une étape c2) de serrage des rabats (13) de peau par des moyens de serrage (145) disposés respectivement entre le produit (1) et les dispositifs de perçage (141) éloignés lors de l'étape c1).

4. Procédé selon la revendication 3, comprenant, après l'étape c2) de serrage, une étape c3) de tirage des rabats (13) de peau par mise en rotation d'au moins un organe de serrage (1451) constitutif des moyens de serrage (145).

5. Procédé selon l'une quelconque des revendications 1 à 4, dans lequel l'étape a) consiste à réaliser soit une entaille (12) en forme de croix pour obtenir une ouverture délimitée par quatre rabats (13) soit une entaille (12) linéaire pour obtenir une ouverture délimitée par deux rabats (13), et dans lequel l'étape b) consiste à percer la peau (11) soit dans les quatre rabats (13) au moyen de quatre dispositifs de perçage (41) soit dans les deux rabats (13) au moyen de deux dispositifs de perçage (141).

6. Procédé selon l'une quelconque des revendications 1 à 5, comprenant après l'étape b) de perçage de la peau (11), une étape de pincement b1) de la peau (11) directement sur les dispositifs de perçage (41) pour serrer les rabats (13) de peau (11) directement sur lesdits dispositifs de perçage (41) avant d'effectuer l'étape d) de déplacement.

7. Procédé selon l'une quelconque des revendications 1 à 6, comprenant, avant l'étape c) de pivotement des dispositifs de perçage (41 ; 141), une étape d'incision de la peau (11) dans la direction longitudinale du saucisson, de préférence dans le prolongement de l'entaille (12) réalisée lors de l'étape a).

8. Appareil de retrait de la peau (11) d'un produit (1) alimentaire allongé, tel qu'un saucisson ou une saucisse, comprenant :
- des moyens de coupe (40 ; 140) conçus pour réaliser au moins une entaille (12) dans la peau (11) à une extrémité du produit (1) pour obtenir une ouverture délimitée par au moins deux rabats (13) ;
- des dispositifs de perçage (41 ; 141) conçus pour percer respectivement la peau (11) de part et d'autre de ladite entaille (12) ;
- des moyens de pivotement (42 ; 142) desdits dispositifs de perçage (41 ; 141) afin d'écarter les rabats (13) délimitant ladite entaille (12) pour élargir ladite ouverture ;
- des moyens de déplacement (32 ; 120, 132, 150) relatif du produit (1) par rapport aux dispositifs de perçage (41 ; 141) dans la direction longitudinale du produit (1).

9. Appareil selon la revendication 8, comprenant des moyens d'éloignement/rapprochement (43 ; 143) des dispositifs de perçage (41 ; 141) par rapport au produit (1).

10. Appareil selon la revendication 9, comprenant des moyens de serrage (145) pourvus respectivement d'au moins deux organes de serrage (1451, 1452) dont l'un (1452) au moins est monté mobile entre :
- une position de repos dans laquelle les organes de serrage (1451, 1452) sont éloignés l'un de l'autre pour permettre le passage des dispositifs de perçage (141) entre les organes de serrage (1451, 1452) correspondants ; et
- une position de serrage dans laquelle les organes de serrage (1451, 1452) serrent entre eux les rabats (13) de peau (11) du produit (1) une fois les dispositifs de perçage (141) éloignés du produit (1) par les moyens d'éloignement/rapprochement (143).

11. Appareil selon la revendication 10, comprenant des moyens de mise en rotation de l'un (1451) au moins des organes de serrage afin de permettre le tirage des rabats (13) de peau (11) après serrage desdits rabats (13) entre lesdits organes de serrage (1451, 1452).

12. Appareil selon l'une quelconque des revendications 8 à 11, dans lequel les moyens de coupe (40 ; 140) sont conçus pour réaliser soit une entaille (12) en forme de croix pour obtenir une ouverture délimitée par quatre rabats (13) soit une entaille (12) linéaire pour obtenir une ouverture délimitée par deux rabats (13), et dans lequel les dispositifs de perçage (41 ; 141) sont soit au nombre de quatre et conçus pour percer la peau (11) dans les quatre rabats (13) respectifs soit au nombre de deux et conçus pour percer la peau (11) dans les deux rabats (13) respectifs.

13. Appareil selon l'une quelconque des revendications 8 à 12, dans lequel les dispositifs de perçage (41) comprennent des moyens de pincement (46) de la peau (11) directement sur les dispositifs de perçage (41) pour serrer les rabats (13) de peau (11) directement sur lesdits dispositifs de perçage (41).

14. Appareil selon l'une quelconque des revendications 8 à 13, comprenant des moyens d'incision (44; 144) de la peau (11) dans la direction longitudinale du produit (1), de préférence dans le prolongement de l'entaille (12) réalisée par les moyens de coupe (40 ; 140).

## Patentansprüche

1. Verfahren zum Abziehen der Haut (11) von einem Lebensmittelprodukt (1) wie einer Salami oder einer Wurst, das sich gemäß einer Längsrichtung erstreckt, wobei das Verfahren die folgenden Schritte umfasst:
a) Herstellen mindestens einer Kerbe (12) in die Haut (11) an einem Ende des Produkts (1), um eine Öffnung zu erhalten, die von mindestens zwei Klappen begrenzt wird,
b) Durchbohren der Haut (11) auf der einen und der anderen Seite der Kerbe (12) mit Hilfe von Bohrvorrichtungen (41 ; 141),
c) Drehen der Bohrvorrichtungen (41; 141), um Klappen (13) abzuspreizen, die die Kerbe (12) begrenzen, um die Öffnung zu erweitern,
d) relative Verlagerung des Produkts (1) im Verhältnis zu den Bohrvorrichtungen (41; 141) in die Längsrichtung des Produkts (1).

2. Verfahren nach Anspruch 1, das nach dem Schritt c) des Drehens der Bohrvorrichtungen (41; 141) einen Schritt c1) des Entfernens der Bohrvorrichtungen (41; 141) im Verhältnis zum Produkt (1) umfasst, um beim Schritt d) der relativen Verlagerung dem Produkt (1) den Durchgang zu lassen.

3. Verfahren nach Anspruch 2, das nach dem Schritt c1) des Entfernens der Bohrvorrichtungen (141) einen Schritt c2) des Spannens der Klappen (13) der Haut durch Spannmittel (145) umfasst, die jeweils zwischen dem Produkt (1) und den bei Schritt c1) entfernten Bohrvorrichtungen (141) angeordnet sind.

4. Verfahren nach Anspruch 3, das nach dem Schritt c2) des Spannens einen Schritt c3) des Ziehens der Klappen (13) der Haut durch Inrotationsversetzen mindestens eines Spannorgans (1451), das Bestandteil der Spannmittel (145) ist, umfasst.

5. Verfahren nach einem der Ansprüche 1 bis 4, wobei der Schritt a) darin besteht, entweder eine Kerbe (12) in Kreuzform herzustellen, um eine von vier Klappen (13) begrenzte Öffnung zu erhalten, oder eine lineare Kerbe (12), um eine von zwei Klappen (13) begrenzte Öffnung zu erhalten, und wobei der Schritt b) darin besteht, die Haut (11) entweder in den vier Klappen (13) mit Hilfe von vier Bohrvorrichtungen (41) oder in den zwei Klappen (13) mit Hilfe von zwei Bohrvorrichtungen (141) zu durchbohren.

6. Verfahren nach einem der Ansprüche 1 bis 5, das nach dem Schritt b) des Durchbohrens der Haut (11) einen Klemmschritt b1) der Haut (11) direkt auf den Bohrvorrichtungen (41) umfasst, um die Klappen (13) der Haut (11) vor Durchführung des Verlagerungsschritts d) direkt auf den Bohrvorrichtungen (41) zu spannen.

7. Verfahren nach einem der Ansprüche 1 bis 6, das vor dem Schritt c) des Drehens der Bohrvorrichtungen (41; 141) einen Schritt des Schlitzens der Haut (11) in die Längsrichtung der Wurst, vorzugsweise in Verlängerung der während des Schritts a) hergestellten Kerbe (12), umfasst.

8. Gerät zum Abziehen der Haut (11) von einem länglichen Lebensmittelprodukt (1) wie einer Salami oder einer Wurst, das umfasst:
- Schneidemittel (40; 140), die ausgebildet sind, um mindestens eine Kerbe (12) in die Haut (11) an einem Ende des Produkts (1) herzustellen, um eine von mindestens zwei Klappen (13) begrenzte Öffnung zu erhalten;
- Bohrvorrichtungen (41; 141) die ausgebildet sind, um jeweils die Haut (11) auf der einen und der anderen Seite der Kerbe (12) zu durchbohren;
- Drehmittel (42; 142) der Bohrvorrichtungen (41; 141), um die Klappen (13), die die Kerbe (12) begrenzen, abzuspreizen, um die Öffnung zu erweitern;
- Mittel der relativen Verlagerung (32; 120, 132, 150) des Produkts (1) im Verhältnis zu den Bohrvorrichtungen (41; 141) in die Längsrichtung des Produkts (1).

9. Gerät nach Anspruch 8, das Entfernungs-/Annäherungsmittel (43; 143) der Bohrvorrichtungen (41; 141) im Verhältnis zum Produkt (1) umfasst.

10. Gerät nach Anspruch 9, das Spannmittel (145) umfasst, die jeweils mit mindestens zwei Spannorganen (1451, 1452) ausgestattet sind, von denen mindestens eins (1452) bewegbar montiert ist zwischen:
- einer Ruhestellung, in der die Spannorgane (1451, 1452) voneinander entfernt sind, um den Durchgang der Bohrvorrichtungen (141) zwischen den entsprechenden Spannorganen (1451, 1452) zu erlauben, und
- einer Spannstellung, in der die Spannorgane (1451, 1452) die Klappen (13) der Haut (11) des Produkts (1) zwischen sich spannen, sobald die Bohrvorrichtungen (141) vom Produkt (1) durch die Entfernungs-/Annäherungsmittel (143) entfernt sind.

11. Gerät nach Anspruch 10, das Mittel zum Inrotationversetzen mindestens eines (1451) der Spannorgane umfasst, um das Ziehen der Klappen (13) der Haut (11) nach dem Spannen der Klappen (13) zwischen den Spannorganen (1451, 1452) zu erlauben.

12. Gerät nach einem der Ansprüche 8 bis 11, wobei die Schneidemittel (40; 140) ausgebildet sind, um entweder eine Kerbe (12) in Kreuzform herzustellen, um eine von vier Klappen (13) begrenzte Öffnung zu erhalten, oder eine lineare Kerbe (12), um eine von zwei Klappen (13) begrenzte Öffnung zu erhalten, und wobei die Bohrvorrichtungen (41; 141) vier Stück sind und ausgebildet, um die Haut in den vier jeweiligen Klappen (13) zu durchbohren oder zwei Stück und ausgebildet, um die Haut (11) in den zwei jeweiligen Klappen (13) zu durchbohren.

13. Gerät nach einem der Ansprüche 8 bis 12, wobei die Bohrvorrichtungen (41) Klemmmittel (46) der Haut (11) direkt auf den Bohrvorrichtungen (41) umfassen, um die Klappen (13) der Haut (11) direkt auf den Bohrvorrichtungen (41) zu spannen.

14. Gerät nach einem der Ansprüche 8 bis 13, das Schlitzmittel (44; 144) der Haut (11) in die Längsrichtung des Produkts (1), vorzugsweise in der Verlängerung der Kerbe (12) umfasst, die von den Schneidemitteln (40; 140) hergestellt sind.

## Claims

1. A method for removing the skin (11) from a food product (1), such as a breakfast sausage or a sausage, extending in a longitudinal direction, comprising the following steps:
a) making at least one notch (12) in the skin (11) at one end of the product (1) to obtain an opening delimited by at least two flaps;
b) piercing the skin (11) on either side of said notch (12) using piercing devices (41; 141);
c) pivoting the piercing devices (41; 141) so as to separate the flaps (13) delimiting said notch (12) to widen said opening;
d) moving the product (1) in relative movement with respect to the piercing devices (41; 141) in the longitudinal direction of the product (1).

2. The method according to claim 1, comprising, after step c) for pivoting the piercing devices (41; 141), a step c1) for moving the piercing devices (41; 141) away from the product (1) to allow the passage of the product (1) during the relative movement step d).

3. The method according to claim 2, comprising, after step c1) for separating the piercing devices (141), a step c2) for gripping the flaps (13) of skin using gripping means (145) respectively positioned between the product (1) and the piercing devices (141) separated during step c1).

4. The method according to claim 3, comprising, after the gripping step c2), a step c3) for pulling the flaps (13) of skin by rotating at least one gripping member (1451) making up the gripping means (145).

5. The method according to any one of claims 1 to 4, wherein step a) consists of producing either an X-shaped notch (12) to obtain an opening delimited by four flaps (13), or a linear notch (12) to obtain an opening delimited by two flaps (13), and in which step b) consists of piercing the skin (11) either in the four flaps (13) using four piercing devices (41) or in the two flaps (13) using two piercing devices (141).

6. The method according to any one of claims 1 to 5, comprising, after step b) for piercing the skin (11), a step b1) for pinching the skin (11) directly on the piercing devices (41) to grip the flaps (13) of skin (11) directly on said piercing devices (41) before carrying out the movement step d).

7. The method according to any one of claims 1 to 6, comprising, before step c) for pivoting the piercing devices (41; 141), a step for making an incision in the skin (11) in the longitudinal direction of the breakfast sausage, preferably in the extension of the notch (12) made during step a).

8. A device for removing the skin (11) from an elongated food product (1), such as a breakfast sausage or a sausage, comprising:
- cutting means (40; 140) designed to produce at least one notch (12) in the skin (11) at one end of the product (1) to obtain an opening delimited by at least two flaps (13);
- piercing devices (41; 141) designed to respectively pierce the skin (11) on either side of said notch (12);
- means (42; 142) for pivoting said piercing devices (41; 141) so as to separate the flaps (13) delimiting said notch (12) to widen said opening;
- means (32; 120, 132, 150) for moving the product (1) in a relative movement with respect to the piercing devices (41; 141) in the longitudinal direction of the product (1).

9. The device according to claim 8, comprising means (43; 143) for bringing the piercing devices (41; 141) further from/closer to the product (1).

10. The device according to claim 9, comprising gripping means (145) respectively provided with at least two gripping members (1451, 1452), at least one of which (1452) is mounted movably between:
- an idle position, in which the gripping members (1451, 1452) are separated from each other to allow the passage of the piercing devices (141) between corresponding gripping members (1451, 1452); and
- the gripping position, in which the gripping members (1451, 1452) grip the flaps (13) of skin (11) of the product (1) between them once the piercing devices (141) are moved away from the product (1) using the separating/approach means (143).

11. The device according to claim 10, comprising means for rotating at least one (1451) of the gripping members so as to make it possible to pull the flaps (13) of skin (11) after gripping said flaps (13) between said gripping members (1451, 1452).

12. The device according to any one of claims 8 to 11, wherein the cutting means (40; 140) are designed to produce either an X-shaped notch (12) to obtain an opening delimited by four flaps (13), or a linear notch (12) to obtain an opening delimited by two flaps (13), and in which there are four piercing devices (41; 141) that are designed to pierce the skin (11) in the four respective flaps (13), or two piercing devices that are designed to pierce the skin (11) in the two respective flaps (13).

13. The device according to any one of claims 8 to 12, wherein the piercing devices (41) comprise means (46) for pinching the skin (11) directly on the piercing devices (41) to grip the flaps (13) of skin (11) directly on said piercing devices (41).

14. The device according to any one of claims 8 to 13, comprising means (44; 144) for making an incision in the skin (11) in the longitudinal direction of the product (1), preferably in the extension of the notch (12) formed by the cutting means (40; 140).
